# EUROPÄISCHE PATENTSCHRIFT

(11) **EP 1 586 619 B1**
(45) Veröffentlichungstag und Bekanntmachung des Hinweises auf die Patenterteilung: **28.11.2012**
(21) Anmeldenummer: 05006204.1
(22) Anmeldetag: 22.03.2005
(51) Int. Cl.: C09K 21/12

(54) **Phosphorhaltige Flammschutzmittelformulierung für cellulosehaltige Materialien**
Phosphorous containing flame retardants for cellulose containing materials
Agents d'ignifugation contenant du phosphore pour matériaux cellulosiques

(30) Priorität: 30.03.2004 DE 102004015356
(43) Veröffentlichungstag der Anmeldung: 19.10.2005
(73) Patentinhaber: Clariant Produkte (Deutschland) GmbH, 65929 Frankfurt am Main (DE)
(72) Erfinder: Bauer, Harald, Dr., 50170 Kerpen (DE); Krause, Werner, Dr., 50354 Hürth (DE); Sicken, Martin, Dr., 51149 Köln (DE); Thewes, Volker, Dr., 50374 Erftstad (DE)

(56) Entgegenhaltungen:
- EP-A- 1 400 573
- US-A- 4 435 533

## Beschreibung

Die Erfindung betrifft die Verwendung einer phosphorhaltigen Flammschutzmittelformulierung für cellulosehaltige Materialien.

Aus der US-A-5,389,309 sind Flammschutzmittelformulierungen auf Basis von Diammoniumphosphaten für Textilien, Holz und Papier bekannt.

Aus WO-A-98/24604 sind flammschützende Imprägnierungen für Holz, Papier und Textilien auf Basis von Ammoniumphosphaten, Phosphorsäure und wasserlöslichen Salzen bekannt, die mit Phosphationen wasserunlösliche Salze bilden können.

Der Nachteil bei Ammonium(poly)phosphat-basierenden Flammschutzmitteln ist der schon bei relativ niedrigen Temperaturen einsetzende Intumeszenz-(Aufbläh-)effekt und eine Restlöslichkeit des Ammoniumpolyphosphates in Wasser von bis zu 10 Gew.-% (bezogen auf Ammoniumphosphat).

Aufgabe der Erfindung ist es, eine phosphorhaltige Flammschutzmittelformulierung für cellulosehaltige Materialien bereitzustellen, welche eine gute Flammschutzwirkung bei relativ geringen Einsatzmengen ohne Aufblähen und geringer Wasserrestlöslichkeit zeigt.

Überraschenderweise wurde gefunden, dass die Wasserlöslichkeit der erfindungsgemäß eingesetzten phosphorhaltigen Flammschutzmittelformulierung geringer als vergleichbare, auf Phosphorsäure und/oder Ammoniumphosphate basierende Systeme ist.

Außerdem wurde eine gegenüber auf Ammoniumphosphat basierenden Systemen deutlich erhöhte thermische Stabilität gefunden.

Gegenstand der Erfindung ist daher die Verwendung einer phosphorhaltigen Flammschutzmittelformulierung, bestehend aus
0,1 bis 99,9 Gew.-% eines Harzes einer organischen Stickstoffverbindung, dadurch gekennzeichnet, dass es sich dabei um Urethane, Cyanamid, Dicyandiamid, Anilin, Sulfonamid, Biuret, Allantoin, Tolyltriazol, Benzotriazol, 2-Amino-4-methylpyrimidin, Hydantoin, substituierte Hydantoinderivaten, Malonsäureamidamidin, Ethylen-bis-5-triazon, Glycinanhydrid und beliebige Mischungen davon handelt, und 0,1 bis 99,9 Gew.-% eines phosphorhaltigen Flammschutzmittels, dadurch gekennzeichnet, dass es sich bei dem phosphorhaltigen Flammschutzmittel um ein partikuläres oder ein nicht-partikuläres phosphorhaltiges Flammschutzmittel handelt und es sich bei dem partikulären phosphorhaltigen Flammschutzmittel um ein Phosphinsäuresalz der Formel (I) und/oder ein Diphosphinsäuresalz der Formel (II) und/oder deren Polymere 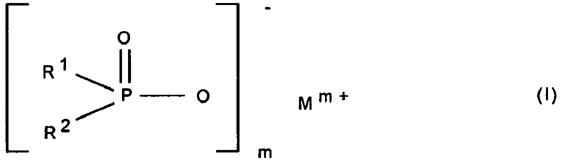 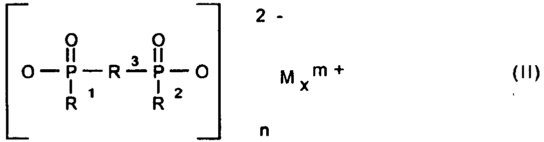 worin
R¹, R² gleich oder verschieden sind und C₁-C₆-Alkyl, linear oder verzweigt und/oder Aryl; R³ C₁-C₁₀-Alkylen, linear oder verzweigt, C₆-C₁₀-Arylen, -Alkylarylen oder
   - Arylalkylen; M Mg, Ca, Al, Sb, Sn, Ge, Ti, Fe, Zr, Ce, Bi, Sr, Mn, Li und/oder eine protonierte Stickstoffbase; m 1 bis 4; n 1 bis 4; x 1 bis 4 bedeuten und es sich bei dem nicht-partikulären phosphorhaltigen Flammschutzmittel um ein Phosphinsäure und/oder -salz der Formel (I) und/oder ein Diphosphinsäure und/oder
   - salz der Formel (II) und/oder deren Polymere handelt, worin R¹, R² und R³ die genannte Bedeutung haben und M Na, K oder H, sowie
m 1;
n 1;
x 1 bedeuten, handelt, zur Flammschutzausrüstung von Papier, Pappe, Karton, Textilien, Holz und anderen cellulosehaltigen Materialen, dadurch gekennzeichnet, dass bei der Masseleimung von Papier, Pappe oder Karton die phosphorhaltige Flammschutzmittelformulierung zur Faserstoffsuspension zugegeben wird; für die Flammschutzausrüstung von Textilien die phosphorhaltige Flammschutzmittelformulierung in Form einer Imprägnierlösung auf die Textilien aufgebracht wird; für die Flammschutzausrüstung von Holz das Holz in eine Imprägnierungsanlage gebracht wird und für mindestens 20 Minuten einem Druck von 50 mbar ausgesetzt wird, wobei das Holz bei einem Druck von 16 bar für 1 bis 10 Stunden mit einer Imprägnierungslösung, welche die phosphorhaltige Flammschutzmittelformulierung der Ansprüche 1 bis 12 enthält, imprägniert wird; oder für die Flammschutzausrüstung von Holz das Holz durch Tauch-, Sprüh- oder Streichverfahren, wobei die Beschichtungskomponente die phosphorhaltige Flammschutzmittelformulierung enthält, beschichtet wird.

Bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen.

Bevorzugt handelt es sich um eine einkomponentige Flammschutzmittelformulierung, die aus 18,8 bis 69,9 Gew.-% eines Harzes einer organischen Stickstoffverbindung und 81,2 bis 30,1 Gew.-% partikulärem phosphorhaltigen Flammschutzmittel besteht.

Die mittlere Teilchengröße d₅₀ des partikulären Flammschutzmittels beträgt 1 nm bis 5 mm, bevorzugt 100 nm bis 100 µm und besonders bevorzugt 1 bis 20 µm.

Bevorzugt enthält die phosphorhaltige Flammschutzmittelformulierung weiterhin eine Aluminium-, Titan-, Zink-, Zinn- und/oder Zirkonium-Verbindung.

Bevorzugt handelt es sich bei der phosphorhaltigen Flammschutzmittelformulierung um eine einkomponentige Flammschutzmittelformulierung, die aus 18,8 bis 69,9 Gew.-% eines Harzes einer organischen Stickstoffverbindung und 81,2 bis 30,1 Gew.-% nichtpartikulärem phosphorhaltigen Flammschutzmittel besteht.

In einer anderen Ausführungsform handelt es sich bei der phosphorhaltigen Flammschutzmittelformulierung um eine zweikomponentige phosphorhaltige Flammschutzmittelformulierung, die aus 0,1 bis 99,9 Gew.-% einer Komponente A und 0,1 bis 99,9 Gew.-% einer Komponente B besteht, wobei die Komponente A aus 0,1 bis 99,9 Gew.-% Harz einer organischen Stickstoffverbindung und 0,1 bis 99,9 Gew.-% nichtpartikulärem phosphorhaltiges Flammschutzmittel besteht und die Komponente B eine Aluminium- und/oder Titan- und/oder Zink- und/oder Zinn- und/oder Zirkonium-Verbindung ist.

Bevorzugt besteht die zweikomponentige phosphorhaltige Flammschutzmittelformulierung aus 68,9 bis 87,9 Gew.-% einer Komponente A und 31,1 bis 12,1 Gew.-% einer Komponente B, wobei die Komponente A aus 93,7 bis 1,5 Gew.-% Harz einer organischen Stickstoffverbindung und 6,3 bis 98,5 Gew.-% nichtpartikulärem phosphorhaltigem Flammschutzmittel besteht und die Komponente B eine Aluminium- und/oder Titan- und/oder Zink- und/oder Zinn- und/oder Zirkonium-Verbindung ist.

In einer weiteren Ausführungsform handelt es sich bei der phosphorhaltigen Flammschutzmittelformulierung um eine zweikomponentige phosphorhaltige Flammschutzmittelformulierung, die aus 0,1 bis 99,9 Gew.-% einer Komponente C und 0,1 bis 99,9 Gew.-% einer Komponente D besteht, wobei die Komponente C aus 0,1 bis 99,9 Gew.-% Harz einer organischen Stickstoffverbindung und 0,1 bis 99,9 Gew.-% einer Aluminium- und/oder Titan- und/oder Zink- und/oder Zinn- und/oder Zirkonium-Verbindung besteht die Komponente D ein nichtpartikuläres phosphorhaltiges Flammschutzmittel ist.

Bevorzugt besteht die zweikomponentige phosphorhaltige Flammschutzmittelformulierung aus 22,3 bis 86,8 Gew.-% einer Komponente C und 77,7 bis 13,2 Gew.-% einer Komponente D, wobei die Komponente C aus 51,5 bis 67,5 Gew.-% Harz einer organischen Stickstoffverbindung und 48,5 bis 32,5 Gew.-% einer Aluminium- und/oder Titan- und/oder Zink- und/oder Zinn- und/oder Zirkonium-Verbindung besteht und die Komponente D ein nichtpartikuläres phosphorhaltiges Flammschutzmittel ist.

In einer weiteren Ausführungsform handelt es sich bei der phosphorhaltigen Flammschutzmittelformulierung um eine dreikomponentige phosphorhaltige Flammschutzmittelformulierung, die aus 0,1 bis 99,9 Gew.-% einer Komponente E, einem Harz einer organischen Stickstoffverbindung, 0,1 bis 99,9 Gew.-% einer Komponente D, einem nichtpartikulären phosphorhaltigen Flammschutzmittel und 0,1 bis 99,9 Gew.-% einer Komponente B, einer Aluminium- und/oder Titan- und/oder Zink- und/oder Zinn- und/oder Zirkonium-Verbindung besteht.

Bevorzugt beträgt die thermische Stabilität der erfindungsgemäßen Flammschutzformulierung zwischen 200 und 500°C, besonders bevorzugt zwischen 250 und 400°C.

Bevorzugt beträgt Löslichkeit des partikulären Flammschutzmittels 0,001 bis 15 Gew.-% in Wasser und/oder organischen Lösungsmitteln, wie Alkohole, Glykole, aliphatische Kohlenwasserstoffe, aromatische Kohlenwasserstoffe, Halogenkohlenwasserstoffe, alicyclische Kohlenwasserstoffe, Ether, Glykolether, Ketone, Ester und/oder Carbonsäuren, bevorzugt 0,1 bis 9,9 Gew.-%.

In einer anderen Ausführungsform der Erfindung handelt es sich bei dem phosphorhaltigen Flammschutzmittel um ein nicht-partikuläres phosphorhaltiges Flammschutzmittel.

Bevorzugt handelt es sich bei dem nicht-partikulären phosphorhaltigen Flammschutzmittel um ein Phosphinsäure und/oder -salz der Formel (I) und/oder ein Diphosphinsäure und/oder -salz der Formel (II) und/oder deren Polymere, worin R¹, R² und R³ die genannte Bedeutung haben und M Na, K oder H, sowie m 1; n 1; x 1 bedeuten.

Bevorzugt besteht die zweikomponentige phosphorhaltige Flammschutzmittelformulierung aus 68,9 bis 94,2 Gew.-% einer Komponente A und 31,1 bis 5,83 Gew.-% einer Komponente B, wobei die Komponente A aus 93,7 bis 12,9 Gew.-% Harz einer organischen Stickstoffverbindung und 6,3 bis 87,1 Gew.-% nichtpartikulärem phosphorhaltiges Flammschutzmittel besteht und die Komponente B eine Aluminium- und/oder Titan- und/oder Zink- und/oder Zinn- und/oder Zirkonium-Verbindung ist.

Bevorzugt besteht die zweikomponentige phosphorhaltige Flammschutzmittelformulierung, die aus 13,3 bis 95,6 Gew.-% einer Komponente C und 86,7 bis 4,4 Gew.-% einer Komponente D, wobei die Komponente C aus 9,6 bis 67,5 Gew.-% Harz einer organischen Stickstoffverbindung und 90,4 bis 32,5 Gew.-% einer Aluminium- und/oder Titan- und/oder Zink- und/oder Zinn- und/oder Zirkonium-Verbindung besteht und die Komponente D ein nichtpartikuläres phosphorhaltiges Flammschutzmittel ist.

Bevorzugt handelt es sich um eine dreikomponentige phosphorhaltige Flammschutzmittelformulierung, die aus 1 bis 65 Gew.-% einer Komponente E, einem Harz einer organischen Stickstoffverbindung, 4 bis 87 Gew.-% einer Komponente D, einem nichtpartikulären phosphorhaltigen Flammschutzmittel und 12 bis 32 Gew.-% einer Komponente B, einer Aluminium- und/oder Titan- und/oder Zink- und/oder Zinn- und/oder Zirkonium-Verbindung besteht.

Bevorzugt handelt es sich um eine dreikomponentige phosphorhaltige Flammschutzmittelformulierung, die aus 11 bis 59 Gew.-% einer Komponente E, einem Harz einer organischen Stickstoffverbindung, 13 bis 78 Gew.-% einer Komponente D, einem nichtpartikulären phosphorhaltigen Flammschutzmittel und 12 bis 38 Gew.-% einer Komponente B, einer Aluminium- und/oder Titan- und/oder Zink- und/oder Zinn- und/oder Zirkonium-Verbindung besteht.

Bevorzugt handelt es sich bei den Harzen einer organischen Stickstoffverbindung um Harze und/oder Kondensate von Carbonylverbindungen mit organischen Stickstoffverbindungen, wie z. B. Harnstoff, substituierten Harnstoffderivaten, Thioharnstoff, Guanidin, substituierten Guanidinderivaten, Biguanid, Melamin, substituierten Melaminderivaten, Kondensationsprodukte des Melamins und höher kondensierte Verbindungen davon, Melamin-Phenol-Systeme, Benzoguanamin, Acetoguanamin, Urethanen, Cyanamid, Dicyandiamid, Anilin, Sulfonamid, Biuret, Allantoin, Tolyltriazol, Benzotriazol, 2-Amino-4-methylpyrimidin, Hydantoin, substituierten Hydantoinderivaten, Malonsäureamidamidin, Ethylen-bis-5-triazon, Glycinanhydrid und beliebige Mischungen davon.

Bevorzugt handelt es sich bei den Harzen der organischen Stickstoffverbindung um Dicyandiamid-Harze bestehend aus 1 Mol Dicyandiamid und 1 bis 10 Mol Formaldehyd, bevorzugt aus 1 Mol Dicyandiamid und 1 bis 4 Mol Formaldehyd.

Bevorzugt beträgt die Löslichkeit des nicht-partikulären Flammschutzmittels 20 bis 100 Gew.-% in Wasser und/oder organischen Lösungsmitteln, wie Alkohole, Glykole, aliphatische Kohlenwasserstoffe, aromatische Kohlenwasserstoffe, Halogenkohlenwasserstoffe, alicyclische Kohlenwasserstoffe, Ether, Glykolether, Ketone, Ester und/oder Carbonsäuren.

Die Erfindung betrifft auch ein Verfahren zur Herstellung einer phosphorhaltigen Flammschutzmittelformulierung, dadurch gekennzeichnet, dass organische Stickstoffverbindungen (z. B. Dicyandiamid), Formaldehyd und ggf. Lösungsmittel bei 10 bis 300°C für 0,1 bis 100h gemischt werden, wobei ein- oder mehrwertige Amine sowie partikuläre und/oder nichtpartikuläre phosphorhaltige Flammschutzmittel und ggf. Aluminium- und/oder Titan- und/oder Zink- und/oder Zinn- und/oder Zirkonium-Verbindungen untergemischt werden.

Bevorzugt werden beim Verfahren zur Herstellung einer phosphorhaltigen Flammschutzmittelformulierung aus den Komponenten A und B zur Herstellung der Komponente A Dicyandiamid, Formaldehyd und Lösungsmittel sowie wahlweise ein- oder mehrwertige Amine bei 10 bis 300°C für 0,1 bis 100h gemischt und die nichtpartikulären phosphorhaltigen Flammschutzmittel zugefügt und dann für die Komponente B Aluminium- und/oder Titan- und/oder Zink- und/oder Zinn- und/oder Zirkonium-Verbindungen untergemischt.

Bevorzugt werden beim Verfahren zur Herstellung einer phosphorhaltigen Flammschutzmittelformulierung aus den Komponenten C und D zur Herstellung der Komponente C Dicyandiamid, Formaldehyd und Lösungsmittel sowie wahlweise ein- oder mehrwertige Amine bei 10 bis 300°C für 0,1 bis 100h gemischt und Aluminium-und/oder Titan- und/oder Zink- und/oder Zinn- und/oder Zirkonium-Verbindungen zugefügt und dann für die Komponente D die nichtpartikulären phosphorhaltigen Flammschutzmittel untergemischt.

Bevorzugt werden beim Verfahren zur Herstellung einer phosphorhaltigen Flammschutzmittelformulierung aus den Komponenten E, D und B zur Herstellung der Komponente E Dicyandiamid, Formaldehyd und Lösungsmittel sowie wahlweise ein- oder mehrwertige Amine bei 10 bis 300°C für 0,1 bis 100h gemischt, dann als Komponente D die nichtpartikulären phosphorhaltigen Flammschutzmittel zugefügt und schließlich als Komponente B Aluminium- und/oder Titan- und/oder Zink- und/oder Zinn- und/oder Zirkonium-Verbindungen untergemischt.

Bevorzugt wird der pH-Wert durch Einmischen von pH-Stellmitteln bei 10 bis 300°C für 0,1 bis 100h, bevorzugt auf einen pH-Wert von 8 bis 13, eingestellt.

Die Erfindung betrifft schließlich auch die Verwendung der erfindungsgemäßen phosphorhaltigen Flammschutzmittelformulierung zur Flammschutzausrüstung von Papier, Pappe, Karton, Textilien, Holz und anderen cellulosehaltigen Materialen.

Bevorzugt wird bei der Verwendung zur Flammschutzausrüstung von Papier, Pappe und Karton bei der Masseleimung eine phosphorhaltige Flammschutzmittelformulierung, bestehend aus dem Harz einer organischen Stickstoffverbindung und partikulärem phosphorhaltigem Flammschutzmittel, zur Faserstoffsuspension zugegeben.

Bevorzugt wird bei der Verwendung zur Flammschutzausrüstung von Papier, Pappe und Karton bei der Masseleimung eine phosphorhaltige Flammschutzmittelformulierung, bestehend aus dem Harz einer organischen Stickstoffverbindung und nichtpartikulärem phosphorhaltigen Flammschutzmittel, zur Faserstoffsuspension zugegeben.

Bevorzugt wird bei der Verwendung zur Flammschutzausrüstung von Papier, Pappe und Karton bei der Masseleimung eine zweikomponentige phosphorhaltige Flammschutzmittelformulierung, bestehend aus den Komponenten A und B, zur Faserstoffsuspension zugegeben.

Bevorzugt wird bei der Verwendung zur Flammschutzausrüstung von Papier, Pappe und Karton bei der Masseleimung eine zweikomponentige phosphorhaltige Flammschutzmittelformulierung, bestehend aus den Komponenten C und D, zur Faserstoffsuspension zugegeben.

. Bevorzugt wird bei der Verwendung zur Flammschutzausrüstung von Papier, Pappe und Karton bei der Masseleimung eine dreikomponentige phosphorhaltige Flammschutzmittelformulierung, bestehend aus den Komponenten E, D und B, zur Faserstoffsuspension zugegeben.

Bevorzugt wird bei der Verwendung zur Flammschutzausrüstung von Textilien eine erfindungsgemäße phosphorhaltige Flammschutzmittelformulierung in Form einer Imprägnierlösung auf das Textilgewebe aufgebracht.

Bevorzugt wird bei dieser Verwendung die Imprägnierlösung durch Eintauchen oder durch Aufsprühen auf das Textilgewebe aufgebracht.

Bevorzugt wird bei der Verwendung zur Flammschutzausrüstung von Holz das Holz in eine Imprägnierungsanlage gebracht und für mindestens 20 Minuten einem Druck von 50 mbar ausgesetzt, wobei das Holz bei einem Druck von 16 bar für 1 to 10 Stunden mit einer Imprägnierungslösung, welche eine erfindungsgemäße phosphorhaltige Flammschutzmittelformulierung enthält, imprägniert.

Bevorzugt wird bei der Verwendung zur Flammschutzausrüstung von Holz das Holz durch Tauch-, Sprüh- oder Streichverfahren, wobei die Beschichtungskomponente eine erfindungsgemäße phosphorhaltige Flammschutzmittelformulierung enthält, beschichtet.

Die Erfindung betrifft auch flammgeschützte cellulosehaltige Formkörper, enthaltend
0,01 bis 90 Gew.-% Cellulose
0,01 bis 90 Gew.-% Harz einer organischen Stickstoffverbindung
0,01 bis 90 Gew.-% nichtpartikuläres phosphorhaltiges Flammschutzmittel
0,01 bis 90 Gew.-% Aluminium- und/oder Titan- und/oder Zink- und/oder Zinn- und/oder Zirkonium-Verbindung.

Die Erfindung betrifft auch flammgeschützte cellulosehaltige Formkörper, enthaltend
0,01 bis 90 Gew.-% Cellulose
0,01 bis 90 Gew.-% Harz einer organischen Stickstoffverbindung
0,01 bis 90 Gew.-% partikuläres phosphorhaltiges Flammschutzmittel.

Die Erfindung betrifft auch flammgeschützte cellulosehaltige Formkörper, enthaltend
1 bis 50 Gew.-% Cellulose
1 bis 30 Gew.-% Dicyandiamid-Formaldehyd-Harz
1 bis 50 Gew.-% partikuläres phosphorhaltiges Flammschutzmittel.

Die Erfindung betrifft auch flammgeschützte cellulosehaltige Formkörper, enthaltend
1 bis 50 Gew.-% Cellulose
1 bis 30 Gew.-% Melamin-Formaldehyd-Harz
1 bis 50 Gew.-% partikuläres phosphorhaltiges Flammschutzmittel.

Insgesamt kann es sich bei den cellulosehaltigen Materialien und Formkörpern um Papier, Pappe und Karton, Tapeten, Furnierholz, Furnierplatten, Tischlerplatten, Schichtholz, Holzspanplatten Holzfaserplatten, (Harte, Mittelharte und Poröse), Polymerholz , Parkett, Verbundholzkörper, Schnittholz, Holz, gesägte Holzbretter, gesägtes Bauholz, Pappe und andere handeln.

Bevorzugte Harze einer organischen Stickstoffverbindung sind Harze und/oder Kondensate von Carbonylverbindungen mit Harnstoff, substituierten Harnstoffderivaten (z.B. Dimethylharnstoff, N,N'-Diphenylharnstoff, Benzylharnstoff, Acetylenharnstoff, Tetramethylharnstoff), Thioharnstoff, Guanidin, substituierten Guanidinderivaten (z.B. Alkylguanidin, Arylguanidin, Diphenylguanidin), Biguanid, Melamin, substituierten Melaminderivaien (z.B. Ethylendimelamin), Kondensationsprodukte des Melamins wie z. B. Melem, Melam oder Melon bzw. höher kondensierte Verbindungen dieses Typs, Melamin-Phenol-Systemen, Benzoguanamin, Acetoguanamin, Urethanen, Cyanamid, Dicyandiamid, Anilin, Sulfonamid, Biuret, Allantoin, Tolyltriazol, Benzotriazol, 2-Amino-4-methylpyrimidin, Hydantoin, substituierten Hydantoinderivaten (z.B. 5,5-Diphenylhydantoin), Malonsäureamidamidin, Ethylen-bis-5-triazon, Glycinanhydrid und beliebige Mischungen davon.

Bevorzugte Carbonylverbindungen sind Aldehyde. Besonders bevorzugt sind dabei aliphatische Aldehyde wie z.B. Formaldehyd, Acetaldehyd, Propionaldehyd etc.

Ganz besonders bevorzugt sind Kombinationen aus Dicyandiamid Harzen und partikulärem phosphorhaltigen Flammschutzmittel.

Bei den erfindungsgemäßen einkomponentigen phosphorhaltigen Flammschutzmittelformulierung sind dabei bevorzugt Kombinationen aus 0,05 bis 20 mol Dicyandiamid (Harz-Basisstoff) zu 1 mol partikuläres phosphorhaltiges Flammschutzmittel, besonders bevorzugt 0,1 bis 10 mol Dicyandiamid (Harz-Basisstoff) zu 1mol partikuläres phosphorhaltiges Flammschutzmittel und insbesondere0,5 bis 5 mol Dicyandiamid (Harz-Basisstoff) zu 1 mol partikuläres phosphorhaltiges Flammschutzmittel.

Bei der Zusammensetzung der erfindungsgemäßen einkomponentigen phosphorhaltigen Flammschutzmittelformulierung, bestehend aus einem Harz einer organischen Stickstoffverbindung und nichtpartikulärem phosphorhaltigen Flammschutzmittel, ist in Bezug auf die Einzelkomponenten bevorzugt:
a) 0,05 bis 20 mol Dicyandiamid (Harz-Basisstoff) zu 1 mol nichtpartikulärem phosphorhaltigem Flammschutzmittel, besonders bevorzugt
b) 0,1 bis 10 mol Dicyandiamid (Harz-Basisstoff) zu 1 mol nichtpartikulärem phosphorhaltigem Flammschutzmittel und insbesondere
c) 0,5 bis 5 mol Dicyandiamid (Harz-Basisstoff) zu 1 mol nichtpartikulärem phosphorhaltigem Flammschutzmittel.
Erfindungsgemäß bevorzugt bei den zweikomponentigen phosphorhaltigen Flammschutzmittelformulierungen, bestehend aus Komponente A, dem Harz einer organischen Stickstoffverbindung und einem nichtpartikulären phosphorhaltigen Flammschutzmittel sowie der Komponente B, einer Aluminium-Verbindung, sind:
a) 0,05 bis 20 mol Dicyandiamid (Harz-Basisstoff) zu 3 bis 3,3 mol Phosphor in dem nichtpartikulären phosphorhaltigen Flammschutzmittel zu 1 mol Aluminium, bevorzugt
b) 0,1 bis 10 mol Dicyandiamid (Harz-Basisstoff) zu 3 bis 3,3 mol Phosphor in dem nichtpartikulären phosphorhaltigen Flammschutzmittel zu 1 mol Aluminium, insbesondere
c) 0,5 bis 5 mol Dicyandiamid (Harz-Basisstoff) zu 3 bis 3,3 mol Phosphor in dem nichtpartikulären phosphorhaltigen Flarnmschutzmittel zu 1 mol Aluminium

Erfindungsgemäß bevorzugt bei der anderen zweikomponentigen phosphorhaltigen Flammschutzmittelformulierung, bestehend aus Komponente C, einem Harz einer organischen Stickstoffverbindung und einer Aluminium-Verbindung sowie der Komponente D, einem nichtpartikulären phosphorhaltigen Flammschutzmittel sind:
a) 0,05 bis 20 mol Dicyandiamid zu 3 bis 3,3 mol Phosphor in dem nichtpartikulären phosphorhaltigen Flammschutzmittel zu 1 mol Aluminium, bevorzugt
b) 0,05 bis 10 mol Dicyandiamid zu 3 bis 3,3 mol Phosphor in dem nichtpartikulären phosphorhaltigen Flammschutzmittel zu 1 mol Aluminium, insbesondere
c) 0,05 bis 5 mol Dicyandiamid zu 3 bis 3,3 mol Phosphor in dem nichtpartikulären phosphorhaltigen Flammschutzmittel zu 1 mol Aluminium.

Erfindungsgemäß bevorzugt ist auch eine dreikomponentige phosphorhaltige Flammschutzmittelformulierung, bestehend aus Komponente E, einem Harz einer organischen Stickstoffverbindung, Komponente D, einem nichtpartikulären phosphorhaltigen Flammschutzmittel und Komponente C, einer Aluminium-Verbindung und folgender Zusammensetzung bezogen auf die Einzelkomponenten:
a) 0,05 bis 20 mol Dicyandiamid zu 3 bis 3,3 mol Phosphor in dem nichtpartikulären phosphorhaltigen Flammschutzmittel zu 1 mol Aluminium, bevorzugt
b) 0,05 bis 10 mol Dicyandiamid zu 3 bis 3,3 mol Phosphor in dem nichtpartikulären phosphorhaltigen Flammschutzmittel zu 1 mol Aluminium, insbesondere
c) 0,05 bis 5 mol Dicyandiamid zu 3 bis 3,3 mol Phosphor in dem nichtpartikulären phosphorhaltigen Flammschutzmittel zu 1 mol Aluminium.
Handelt es sich bei der zweikomponentigen phosphorhaltigen Flammschutzmittelformulierung um eine bestehend aus der Komponente A einem Harz einer organischen Stickstoffverbindung und einem nichtpartikulären phosphorhaltigen Flammschutzmittel und einer Komponente B, einer Zink-Verbindung, so sind die Zusammensetzungen:
a) 0,05 bis 20 mol Dicyandiamid, bevorzugt
b) 0,1 bis 10 mol Dicyandiamid, insbesondere
c) 0,5 bis 5 mol Dicyandiamid zu
   2 bis 2,2 mol Phosphor in dem nichtpartikulären phosphorhaltigen Flammschutzmittel zu 1 mol Zink.

Bei der anderen erfindungsgemäßen zweikomponentigen phosphorhaltigen Flammschutzmittelformulierung bestehend aus Komponente C, einem Harz einer organischen Stickstoffverbindung und einer Zink-Verbindung sowie einer Komponente D, einem nichtpartikulären phosphorhaltigen Flammschutzmittel sind die Zusammensetzungen ebenfalls
a) 0,05 bis 20 mol Dicyandiamid, bevorzugt
b) 0,1 bis 10 mol Dicyandiamid, insbesondere
c) 0,5 bis 5 mol Dicyandiamid zu
   1 mol Zink zu 2 bis 2,2 mol Phosphor in dem nichtpartikulären phosphorhaltigen Flammschutzmittel.

Erfindungsgemäß bevorzugt ist auch eine dreikomponentige phosphorhaltige Flammschutzmittelformulierung bestehend aus Komponente E, einem Harz einer organischen Stickstoffverbindung, Komponente D, einem nichtpartikulären phosphorhaltigen Flammschutzmittel und Komponente C, einer Zink-Verbindung und folgender Zusammensetzung bezogen auf die Einzelkomponenten:
a) 0,05 bis 20 mol Dicyandiamid zu 2 bis 2,2 mol Phosphor in dem nichtpartikulären phosphorhaltigen Flammschutzmittel zu 1 mol Zink, bevorzugt
b) 0,05 bis 10 mol Dicyandiamid zu 2 bis 2,2 mol Phosphor in dem nichtpartikulären phosphorhaltigen Flammschutzmittel zu 1 mol Zink, insbesondere
c) 0,05 bis 5 mol Dicyandiamid zu 2 bis 2,2 mol Phosphor in dem nichtpartikulären phosphorhaltigen Flammschutzmittel zu 1 mol Zink.

Handelt es sich bei der zweikomponentigen phosphorhaltigen Flammschutzmittelformulierung um eine bestehend aus der Komponente A einem Harz einer organischen Stickstoffverbindung und einem nichtpartikulären phosphorhaltigen Flammschutzmittel und einer Komponente B, einer Titan-Verbindung oder um die andere zweikomponentige phosphorhaltige Flammschutzmittelformulierung bestehend aus Komponente C, einem Harz einer organischen Stickstoffverbindung und einer Titan-Verbindung sowie einer Komponente D, einem nichtpartikulären phosphorhaltigen Flammschutzmittel oder um eine dreikomponentige phosphorhaltige Flammschutzmittelformulierung bestehend aus Komponente E, einem Harz einer organischen Stickstoffverbindung, Komponente D, einem nichtpartikulären phosphorhaltigen Flammschutzmittel und Komponente C, einer Titan-Verbindung, so weisen diese Flammschutzmittelformulierungen und folgende Zusammensetzungen auf:
a) 0,05 bis 20 mol Dicyandiamid, bevorzugt
b) 0,1 bis 10 mol Dicyandiamid, insbesondere
c) 0,5 bis 5 mol Dicyandiamid zu
   2 bis 2,2 mol Phosphor in dem nichtpartikulären phosphorhaltigen Flammschutzmittel zu 0,5 mol Titan.

Die Herstellung der Dicyandiamid-Harze erfolgt durch Reaktion von 1 Mol Dicyandiamid mit 1 bis 4 Mol Formaldehyd bei einem pH-Wert von 8 bis 13 wahlweise in Gegenwart von 0,1 bis 2 Mol einer anorganischen oder organischen Säure und/oder wahlweise eines Ammonium- oder Aminsalzes einer anorganische oder organischen Säure und/oder wahlweise 0,05 bis 0,5 Mol eines ein- oder mehrwertigen Amins.

Als anorganische Säuren kommen dabei insbesondere Salz-, Schwefel-, Salpeter-, Phosphorsäure und als organische Säuren Ameisen-, Essig- oder Oxalsäure Phosphinsäuren, phosphonige Säuren in Frage.

Der pH-Wert kann wahlweise durch Zugabe von pH-Stellmitteln eingestellt werden. Bevorzugte pH-Stellmittel sind Ammoniumhydroxid, -chlorid, -carbonat, -nitrat und - sulfat sowie Ammoniumformiat und -acetat.

Bevorzugte pH-Stellmittel sind weiterhin die üblichen Alkalien wie z.B. Alkali- und Erdalkalihydroxiden, -carbonaten und/oder hydroxidcarbonaten eingestellt werden. Bevorzugte pH-Stellmittel sind weiterhin Aminsalze wie Ethylendiamin, Formiat oder Triethylentetramin-Hydrochlorid.

Die bevorzugten ein- oder mehrwertigen Amine sind Ethylendiamin, Propylendiamin, Diethylentriamin und Triethylentetramin sowie substituierte Derivate wie Mono- oder Diethanolamin.

Die Dicyandiamid-Formaldehyd-Harze werden bevorzugt als 10 bis 60 gew.-%ige wässrige Lösungen eingesetzt.

Unter protonierten Stickstoffbasen werden bevorzugt die protonierten Basen von Ammoniak, Melamin, Triethanolamin, insbesondere NH₄⁺, verstanden.

Erfindungsgemäße Lösungsmittel sind bevorzugt Wasser, Alkohole, wie z.B. Methanol, n-Propylalkohol, iso-Propylalkohol, n-Butanol, Iso-Butanol, Amylalkohol etc.

Bevorzugt sind weiterhin aliphatische Kohlenwasserstoffe wie Hexan, Heptan, Octan, und Petrolether; Aromatische Kohlenwasserstoffe wie Benzol, Toluol, Xylol, Ethylbenzol, Diethylbenzol und Chlorobenzol; Halogenkohlenwasserstoffe wie Methylenchlorid, Chloroform, 1,2-Dichloroethan, Chlorobenzol, etc. Tetrachlorkohlenstoff, Tetrabromoethylen; Alicyclische Kohlenwasserstoffe wie Cyclopentan, Cyclohexan, und Methylcyclohexan; Ketone wie Diisobutylketon und Methyl n-propylketon; Ester wie n-Propylacetat und n-Butylacetat; Carbonsäuren. Eine oder mehrere dieser Verbindungen können allein oder in Kombination eingesetzt werden.

Eingesetzte Metalle bzw. Metallverbindungen:
Bevorzugt ist metallisches Aluminium. Bevorzugt sind auch Aluminiumsalze mit Anionen der siebten Hauptgruppe, wie z.B. Aluminiumfluorid, Aluminiumfluorid trihydrat, Aluminiumchlorid (wasserfrei, kristallisiert; wasserfrei, wasserfrei, sublimiert), Aluminiumchlorid hexahydrat, Aluminiumhydroxychlorid, ALCHLOR®-AC von Hardman Australien, Basische Aluminiurnchloridlösung, Aluminiumchloridlösung und Polyaluminiumchloridlösung, sulfatkonditioniert (PACS) von Lurgi Lifescience, OBRAFLOC 18 von Oker Chemie GmbH, Alkaflock®, Ekocid® 60-Typen, Sachtoklar®-Typen, Ekofloc-Typen, Ekozet-Typen von Sachtleben, wasserfreies Aluminiumbromid, Aluminiumiodid, Aluminiurniodid hexahydrat.

Das Verhältnis von Polyaluminiumhydroxyverbindung zu kationischem Dicyanidiamidharz kann in weiten Grenzen variieren, doch hat sich in der Praxis ein Molverhältnis von Aluminium zu Dicyandiamid von 4 zu 1 bis 1 zu 4 als besonders vorteilhaft erwiesen.

Bevorzugt sind Aluminiumsalze mit Anionen der sechsten Hauptgruppe, wie z.B. Aluminiumsulfid, Aluminiumselenid, ebenso Aluminiumsalze mit Anionen der fünften Hauptgruppe, wie z.B. Aluminiumphosphid, Aluminiumhypophosphit, Aluminiumantimonid, Aluminiumnitrid wie auch Aluminiumsalze mit Anionen der vierten Hauptgruppe, wie z.B. Aluminiumcarbid, Aluminiumhexafluorosilicat sowie Aluminiumsalze mit Anionen der ersten Hauptgruppe wie z.B. Aluminiumhydrid, Aluminium-Calcium-Hydrid, Aluminiumborhydrid.

Bevorzugt sind Aluminiumsalze der Oxosäuren der siebten Hauptgruppe, wie z.B. Aluminiumchlorat sowie Aluminiumsalze der Oxosäuren der sechsten Hauptgruppe, wie z.B. Aluminiumsulfat, Aluminiumsulfat hydrat, Aluminiumsulfat hexahydrat, Aluminiumsulfathexadekahydrat, Aluminiumsulfatoctadekahydrat, Aluminiumsulfat-Lösung von Ekachemicals, Aluminiumsulfat-flüssig von Oker Chemie GmbH, Natrium-Aluminiumsulfat, Natrium-Aluminiumsulfat dodekahydrat, Aluminium-Kaliumsulfat, Aluminium-Kaliumsulfat dodecahydrat, Aluminiumammoniumsulfat, Aluminiumammoniumsulfat dodecahydrat, Magaldrat (Al₅ Mg₁₀ (OH)₃₁ (SO₄ )₂ x nH₂O).

Bevorzugt sind Aluminiumsalze der Oxosäuren der fünften Hauptgruppe, wie z.B. Aluminiumnitrat nonahydrat, Aluminiummetaphosphat, Aluminiumphosphat, leichtes Aluminiumphosphathydrat, monobasisches Aluminiumphosphat, monobasische Aluminiumphosphat-Lösung sowie Aluminiumsalze der Oxosäuren der vierten Hauptgruppe, wie z.B. Aluminiumsilicat, Aluminium-Magnesiumsilicat, Aluminiummagnesium-silicate-hydrate (Almasilat), Aluminiumcarbonate, Hydrotalcite (M₉₆Al₂(OH)₁₆CO₃ * nH₂O), Dihydroxyaluminium natrium carbonate, NaAl(OH)₂CO₃ sowie auch Aluminiumsalze der Oxosäuren der dritten Hauptgruppe, wie z.B. Aluminiumborat.

Bevorzugt sind Aluminiumsalze der Pseudohalogenide, wie z.B. Aluminiumthiocyanat und Aluminiumoxide (purum, purissum, technisch, basisch, neutral, sauer, Aluminiumoxid Hydrat, Aluminiumhydroxide oder gemischte Aluminiumoxidhydroxide und Polyaluminiumhydroxy-Verbindungen, die vorzugsweise einen Aluminiumgehalt von 9 bis 40 Gew.-% besitzen.

Bevorzugte Aluminiumsalze sind solche mit organischen Anionen, wie die.Salze von Mono-, Di-, Oligo-, Polycarbonsäuren wie z.B. Aluminiumdiacetat, Aluminiumacetat basisch, Aluminiumsubacetat, Aluminiumacetotartrat, Aluminiumformiat, Aluminiumlactat, Aluminiumoxalat, Aluminiümtartrat, Aluminiumoleat, Aluminiumpalmitat, Aluminiummonosterarat, Aluminiumstearat, Aluminium trifluoromethansulfonat, Aluminiumbenzoat, Aluminiumsalicylat, Aluminiumhexaharnstoffsulfattriiodid, Aluminium-8-oxychinolat.

Bevorzugte Aluminiumverbindungen sind weiterhin Aluminiumactetylacetonat, Alkylaluminiumverbindungen, Alkylaluminiumchloride, Aluminium-tert.-butoxid, Aluminiumethoxid, Aluminiumisopropoxid, Aluminium-sec.-butoxid.

Bevorzugte Aluminiumsalze besitzen einen Aluminiumgehalt von 9 bis 40 Gew.-% (bezogen auf die Trockenmasse).

Bevorzugt ist elementares, metallisches Zink und Zinksalze mit anorganischen Anionen, wie z.B. Zinkhalogenide (Zinkfluorid, Zinkfluorid tetrahydrat, Zinkchloride (Zinkbutter), Bromide Zinkiodid) u.a.

Bevorzugt sind Zinksalze der Oxosäuren der dritten Hauptgruppe (Zinkborat, z.B. Firebrake ZB, Firebrake 415) und Zinksalze der Oxosäuren der vierten Hauptgruppe (basisches Zinkcarbonat, Zinkhydroxidcarbonat, wasserfreies Zinkcarbonat, basisches Zinkcarbonathydrat, (basisches) Zinksilicat, Zinkhexafluorosilicat, Zinkhexafluorosilicat hexahydrat, Zinkstannat, Zink-Magnesium-Aluminium-Hydroxid-Carbonat) sowie Zinksalze der Oxosäuren der fünften Hauptgruppe (Zinknitrat, Zinknitrat hexahydrat, Nitrite, Zinkphosphat, Zinkpyrophosphat).

Bevorzugt sind auch Zinksalze der Oxosäuren der sechsten Hauptgruppe (Zinksulfat, Zinksulfatmonohydrat, Zinkheptahydrat) und Zinksalze der Oxosäuren der siebten Hauptgruppe (Hypohalogenite, Halogenite, Halogenate, z.B. Zinkiodat, Perhalogenate, z.B. Zinkperchlorat).

Bevorzugt sind Zinksalze der Pseudohalogenide (Zinkthiocyanat, Zinkcyanat Zinkcyanid) sowie Zinkoxide, Zinkperoxide (z.B. Zinkperoxid), Zinkhydroxide oder gemischte Zinkoxidhydroxide (Standard-Zinkoxid, z.B. von Grillo, aktiviertes Zinkoxid, z.B. von Rheinchemie, Zincit, Calamin)

Bevorzugt sind Zinksalze der Oxosäuren der Übergangsmetalle (Zinkchromat(VI)-hydroxyd (Zinkgelb), Zinkchromit, Zinkmolybdat, z.B. Kemgard 911 B, Zinkpermanganat, Zinkmolybdat-Magnesiumsilicat, z.B. Kemgard 911 C).

Bevorzugte Zinksalze sind solche mit organischen Anionen. Dazu gehören Zinksalze von Mono-, Di-, Oligo-, Polycarbonsäuren (Salze der Ameisensäure (Zinkformiate), der Essigsäure (Zinkacetate, Zinkacetat dihydrat, Galzin), der Trifluoressigsäure (Zinktrifluoracetat hydrat), Zinkpropionat, Zinkbutyrat, Zinkvalerat, Zinkcaprylat, Zinkoleat, Zinkstearat, der Oxalsäure (Zinkoxalat), der Weinsäure (Zinktartrat), Citronensäure (tribasisches Zinkcitrat dihydrat), Benzoesäure (Benzoat), Zinksalicylat, Milchsäure (Zinklactat, Zinklactat trihydrat), Acrylsäure, Maleinsäure, Bernsteinsäure, von Aminosäuren (Glyzin), von sauren Hydroxofunktionaen (Zinkphenolat etc), Zink-para-Phenolsulfonat, Zink-para-Phenolsulfonat hydrat, Zinkacetylacetonat hydrat, Zink tannat, Zinkdimethyldithiocarbamat, Zinktrifluormethansulfonat.

Bevorzugt sind auch Zinkphosphid, Zinkselenid, Zinktellurid.

Bevorzugt ist metallisches Titan oder Titansalze mit anorganischen Anionen, wie z.B. Chlorid- Nitrat oder Sulfat- sowie organischen Anionen, wie z.B. Formiat- oder Acetationen. Besonders bevorzugt sind Titandichlorid, Titansesquisulfat, Titan(IV)bronid, Titan(IV)fluorid, Titan(III)chlorid, Titan(IV)chlorid, Titan(IV)chlorid Tetrahydrofuran Komplex, Titan(IV)oxychlorid, Titan(IV)oxychlorid Salzsäure Lösung, Titan(IV)oxysulfat, Titan(IV)oxysulfat Schwefelsäure Lösung und auch Titanoxide.

Bei den Zinn-Verbindungen ist metallisches Zinn sowie Zinnsalze (Zinn(II)chlorid, Zinn(II)chlorid dihydrat, Zinn(IV)chlorid) und Zinnoxide bevorzugt.

Bei den Zirkonium-Verbindungen ist metallisches Zirkonium sowie Zirkoniumsalze wie Zirkonium(IV)chlorid, Zirconiumsulfat, Zirkoniumsulfattetrahydrat, Zirconylacetat, Zirconylchlorid, Zirconylchloridoctahydrat und Zirkonoxide bevorzugt.

Beim Verfahren zur Herstellung einer phosphorhaltigen Flammschutzmittelformulierung für cellulosehaltige Formkörper werden Dicyandiamid, Formaldehyd und Lösungsmittel werden bei 10 bis 300°C für 0,1 bis 100h gemischt. Der pH-Wert wird wahlweise durch Einmischen von pH-Stellmitteln bei 10 bis 300°C für 0,1 bis 100h eingestellt. Bevorzugt ist ein pH-Wert von 8 bis 13. Wahlweise werden ein- oder mehrwertige Amine bei 10 bis 300°C für 0,1 bis 100h untergemischt. Die erfindungsgemäßen partikulären und/oder nichtpartikulären phosphorhaltigen Flammschutzmittel werden bei 10 bis 300°C für 0,1 bis 100h untergemischt. Wahlweise werden Aluminium- und/oder Titan- und/oder Zink- und/oder Zinn- und/oder Zirkonium-Verbindungen bei 10 bis 300°C für 0,1 bis 100h untergemischt.

Bei einem zweiten Verfahren werden Dicyandiamid, Formaldehyd und Lösungsmittel bei 10 bis 300°C für 0,1 bis 100h gemischt. Der pH-Wert wird wahlweise durch Einmischen von pH-Stellmitteln bei 10 bis 300°C für 0,1 bis 100h eingestellt. Bevorzugt ist ein pH-Wert von 8 bis 13. Wahlweise werden ein- oder mehrwertige Amine bei 10 bis 300°C für 0,1 bis 100h untergemischt. Wahlweise werden Aluminium- und/oder Titan- und/oder Zink- und/oder Zinn- und/oder Zirkonium-Verbindungen bei 10 bis 300°C für 0,1 bis 100h untergemischt. Die erfindungsgemäßen partikulären und/oder nichtpartikulären phosphorhaltigen Flammschutzmittel werden bei 10 bis 300°C für 0,1 bis 100h untergemischt.

Bei dem nächsten Verfahren werden zur Herstellung der Komponente E Dicyandiamid, Formaldehyd und Lösungsmittel bei 10 bis 300°C für 0,1 bis 100h gemischt. Der pH-Wert wird wahlweise durch Einmischen von pH-Stellmitteln bei 10 bis 300°C für 0,1 bis 100h eingestellt. Bevorzugt ist ein pH-Wert von 8 bis 13. Wahlweise werden ein- oder mehrwertige Amine bei 10 bis 300°C für 0,1 bis 100h untergemischt.

Die nichtpartikulären phosphorhaltigen Flammschutzmittel werden als Komponente D bei 10 bis 300°C für 0,1 bis 100h untergemischt und dann die Aluminium- und/oder Titan- und/oder Zink- und/oder Zinn- und/oder Zirkonium-Verbindungen als Komponente B bei 10 bis 300°C für 0,1 bis 100h untergemischt.

Jede vorgenannte Komponente kann zur Verbesserung der Einarbeitbarkeit in 1 bis 99 gew.-%iger Lösung eingesetzt werden.

Werden die beiden Komponenten Dicyandiaminharz und Polyaluminiumhydroxyverbindung in Form einer Mischung eingesetzt, so empfiehlt sich ein Mischungsverhältnis von 60 zu 40 bis 5 zu 95.

### Papier

Viele Papiersorten, z.B. Schreib-, Druck und Etikettenpapiere, müssen geleimt werden, um einen kontrollierten Widerstand gegen das Eindringen wässriger Flüssigkeiten zu erhalten und beschreibbar und bedruckbar werden.

Die Leimung der Papiere kann entweder in der Stoffmasse ("Masseleimung") oder durch Imprägnieren der fertigen Papierbahn ("Oberflächenleimung") durchgeführt werden.

Die gängigste Art der Masseleimung stellt das Kolophoniumverfahren (Harzleimverfahren) dar, bei dem das Kolophonium unter sauren Fabrikationsbedingungen mit Aluminiumsulfat auf der Faser niedergeschlagen wird.

Bei den Harzleimen unterscheidet man zwischen Harzseifen (wässrige Lösungen von Alkalisalzen des Harzes (in Handelsform meist 50 gew.-%ig, z.B. Dynakoll von Eka Chemicals) und anionische (z.B. Bewosol von Eka Chemicals) oder kationische (Composize von Eka Chemicals) Harzdispersionen. Bei den natürlichen Leimen seien hierbei Kolophonium, Tierleim, Casein, Stärke, Wachse, Fettsäuren und Tallharze, bei den synthetischen Leimen solche auf Basis Ketendimern, Acrylsäuren, Maleinsäureanhydriden oder Polyvinylacetaten besonders hervorgehoben. In gleicher Weise sind die erfindungsgemäßen Mittel auch für modifizierte Leime (wie z.B. Kolophonium mit dienophilen Säuren) geeignet.
Neben den harzbasierten Masseleimungsmitteln gibt es noch die Gruppe der synthetischen oder reaktiven Masseleimungsmittel. Auch sie werden vor der Blattbildung dem Papierstoff zugegeben. Man unterscheidet zwischen AKD-Leimung (Alkylketendimer (AKD)-Leimungsmittel auf Basis natürliche Fettsäuren, z.B. Palmitin- und Stearinsäure) und ASA-Leimung (Alkenyl Succinic Anhydride Leimung auf Basis langkettige Olefine (C-Kettenlänge 16-20) und Maleinsäureanhydrid.

Die Anwendung der Leimungsmittel in der Masse erfolgt in ähnlicher Weise wie diejenige von Harzleim. Der pH-Wert der Faserstoffsuspension liegt im Allgemeinen zwischen 3,5 und 6,5. Die Leimungsmittel werden den Papierfasersuspensionen in einer Konzentration von 0,1 bis 5, vorzugsweise 0,5 bis 3 Gewichtsprozent, bezogen auf trockenen Faserstoff, zugesetzt.

Bei der Oberflächenleimung von Papier imprägniert man eine bereits gebildete Papierbahn mit der Leimungsmittel enthaltenden wässrigen Lösung bzw. Dispersion der Leimungsmittel. Bevorzugte Leimungsmittel für die Oberflächenleimung sind Stärke, Carboxymethylcellulose, Alginat, Alkalisalzlösungen von Styrolmaleinsäureanhydrid- oder Styrolacrylsäurecopolymere oder Mikroemulsionen von Copolymeren aus Styrol-Acrylderivaten (Jetsize Basis SAE von Eka Chemicals), modifizierten Polyurethanen (Jetsize Basis PU von Eka Chemicals) oder Alkyl-Keten-Dimer-Dispersionen (Jetsize Basis AKD von Eka Chemicals). Um eine gute Leimung zu erzielen, soll das Rohpapier mindestens 0,5 Gewichtsprozent, vorzugsweise 1 bis 4 Gewichtsprozent, Alaun enthalten.

### Sonstige Papieradditive

### Nassfestmittel

Als Nassfestmittel zwei Produktgruppen bevorzugt: Harnstoff-Formaldehyd (HF)-Harze für sauer hergestellte Papiere und Kartons bzw. Poly-Amid-Amin-Epichlorhydrin (PAAE)-Harze bei neutralen und alkalischen Prozessbedingungen

### Zellstoff

Bevorzugte Zellstoffe sind gewonnen aus Nadelholz, z.B. Fichten-, Tannen-, Kiefernholz, oder aus Hartholz, d.h. Laubholz, z.B. Birken-, Buchen-, Pappelholz, der nach herkömmlichen Verfahren, z.B. dem Sulfit- oder vor allem dem Sulfatverfahren hergestellt wird. Beispiele sind Fichte-, Buche, Birke-Sulfat-Zellstoff, Nadelholz-Bisulfitzellstoff, Nadelholz-Sulfitzellstoff, Halbzellstoffe aus Laubholz (Bisulfit-, Neutralsulfit-, gebleichter Neutralsulfit-), Höchstausbeute-Zellstoffe aus Nadel- und Laubholz (Bisulfit-, Nuetralsulfit-, Kaltalkali-), Strohstoffe (Neutralsulfit-, Kaltalkali-) Reyon. Zudem enthält die Faserstoffsuspension gegebenenfalls Holzschliff. Auch Altpapier kann in der Faserstoffsuspension enthalten sein. Auch Zellstoffsuspensionen, die nach dem sogenannten CMP- oder CTMP-Verfahren (Chemimechanical and chemi-thermomechanical pulping processes) hergestellt werden, kommen in Betracht.

### Füllmittel

Als organische Füllmittel sind bevorzugt synthetische Pigmente, z.B. Polykondensationsprodukte aus Harnstoff oder Melamin und Formaldehyd mit großen spezifischen Oberflächen, die in hochdisperser Form vorliegen.

Als mineralische Füllmittel sind bevorzugt Titandioxid, Zinkoxid, Calciumsulfat, Barium sulphat, Bariumcarbonat, Magnesite, Kaolin, Aluminiumsilicate, Calciumsilicate, Oxyhydrates von Aluminium, Talk, Satinweiss, China Clay, Calciumcarbonat in feinteiliger Form, gefällte Kreiden. In der Regel enthält die Faserstoffsuspension 0 bis 40, vorzugsweise 5 bis 25, insbesondere 15 bis 20 Gew.-%, bezogen auf den Feststoffgehalt der Faserstoffsuspension, an Trockensubstanz der Füllmittel der angegebenen Art.

### Retentionsmittel

Retentionsmittel halten die festen Bestandteile des Papierstoffes auf dem Sieb der Papiermaschine zurück. Als Retentionsmittel sind z.B. Polyethylenimin, Polyacrylamide (Eka PL von Eka Chemicals) und Polyaminoamide geeignet, die in Mengen von 0,04 bis 0,1 Gew.-% (Feststoff, bezogen auf trockenen Zellstoff) dem Zellstoff zugesetzt werden. DE2459165 74-12-14 BASF.doc

Beim Verfahren zur Flammschutzausrüstung von Papier, Pappe, Karton wird bei der Masseleimung phosphorhaltiges Flammschutzmittelformulierung (bestehend aus dem Harz einer organischen Stickstoffverbindung und partikulärem phosphorhaltigem Flammschutzmittel) zur Faserstoffsuspension zugegeben.

Bei dem Verfahren zur Flammschutzausrüstung von Papier, Pappe, Karton wird bei der Masseleimung phosphorhaltige Flammschutzmittelformulierung (bestehend aus dem Harz einer organischen Stickstoffverbindung und einem partikulärem oder nichtpartikulärem phosphorhaltigen Flammschutzmittel sowie ggf. einer Aluminium- und/oder Titan- und/oder Zink- und/oder Zinn- und/oder Zirkonium-Verbindung) zur Faserstoffsuspension zugegeben.

Die Zersetzungstemperatur der erfindungsgemäßen phosphorhaltigen Flammschutzmittelformulierung beträgt mehr als 250°C, bevorzugt mehr als 300°C.

### Textilien

Aus WO-A-98/24604 sind flammschützende Imprägnierungen für Holz, Papier und Textilien auf Basis von Ammoniumphosphaten, Phosphorsäure und wasserlöslichen Salzen, die mit Phosphationen wasserunlösliche Salze bilden können.
Aus US-A-4,073,617 sind Flammschutzmittel für textile Materialien bekannt, bestehend aus Dicyandiamid, das mit Formaldehyd und Phosphorsäure kondensiert und danach mit Wasser verdünnt wird und auf das cellulosehaltige Textil (cotton, rayon, polyester/cotton blend) aufgetragen wird.

Die erfindungsgemäße Flammschutzformulierung wird durch Imprägnieren auf die cellulosehaltigen Textilien aufgebracht. Bevorzugte Textilien sind Baumwolle, Rayon, Wolle und Mischgewebe.

Bevorzugtes Verfahren zur Imprägnierung von Textilien ist, die Imprägnierlösung durch Eintauchen auf das Gewebe aufzubringen. Die Einsatzmenge der Trockenmasse Imprägnierlösung kann bezogen auf die Trockenmasse Gewebe zwischen 1-25 Gew.-% liegen. Bevorzugt ist danach die überschüssige Flüssigkeit auszuquetschen und bei 30 bis 300°C zu trocknen. Das Gewichtsverhältnis nach Trocknung ist danach Gewebe zu Imprägnierung 8 zu 2 bis 9 zu 1.

Bevorzugtes Verfahren zur Imprägnierung von Textilien ist, die Imprägnierlösung durch Aufsprühen auf das Gewebe aufzubringen. Die Einsatzmenge der Trockenmasse Imprägnierlösung kann bezogen auf die Trockenmasse Gewebe zwischen 5 - 25 Gew.-% liegen. Bevorzugt ist, danach die überschüssige Flüssigkeit auszuquetschen und bei 30 bis 300°C zu trocknen. Das Gewichtsverhältnis nach Trocknung ist danach Gewebe zu Imprägnierung 8 zu 2 bis 9 zu 1.

### Imprägnierung von Holz

Cellulosehaltige Formkörper können weiterhin sein: Furnierholz, Furnier(holz)platten, Tischlerplatten, Schichtholz, Pressspanplatten, Holzspanplatten, (Harte, Mittelharte und Poröse) Holzfaserplatten, Sperrholzplatten, Polymerholz, Parkett, Verbundholzkörper, Schnittholz, Holz, gesägte (Fichten, Kiefer) Bretter, gesägtes Bauholz und andere.

Zur Imprägnierung von Holz wird bevorzugt ein pressure-vacuum Verfahren eingesetzt. Dazu wird das Holz in die Imprägnierungsanlage gebracht und für mindestens 20 Minuten einem Druck von 50 mbar ausgesetzt. Die Imprägnierungslösung wird in das Druckgefäß gepumpt und das Holz bei einem Druck von 16 bar für 1 to 10 h imprägniert.

Bevorzugt ist eine Imprägnierungslösung mit 1-50 Gew.-% Aktivsubstanz. Das Holz wird bevorzugt bei 60°C im einem Holztrockner bei langsam abnehmender Luftfeuchte getrocknet. Nach dem Trocknen enthält das Holz 1-40 Gew.-% der Imprägnierung (bezogen auf die Trockenmasse trockenes Holz).

Ein weiteres bevorzugtes Verfahren zur Imprägnierung von Holz ist dieses zu beschichten. Bevorzugte Verfahren sind Tauch-, Sprüh- oder Streichverfahren.

Die Erfindung wird durch die nachstehenden Beispiele erläutert.

### Aufblähen

Eine Probe wird bei 250°C während 24h im Trockenschrank gelagert und danach visuell abgemustert.

### Erstlöslichkeit

10 g einer Probe werden in 100 g demineralisiertem Wasser 1h bei 90°C gerührt, abfiltriert und das Filtrat auf Phosphor analysiert. Der Phosphorgehalt wild auf phosphorhaltiges Flammschutzmittel umgerechnet.

### Beispiel 1

In einem Dreihalsrundkolben mit aufgesetztem Rückflusskühler werden 2,7 Gew.-Teile Dicyandiamid, 7,1 Gew.-Teile 30%iges wässriges Formaldehyd, 1,4 Gew.-Teile Ammoniumchlorid und 1223,8 Gew.-Teile Wasser vorgelegt. Es werden 0,2 Gew.-Teile Ethylendiamin unter Rühren zugesetzt und auf 90 bis 95°C erhitzt. Nach etwa 10 Min ist die Reaktion beendet. Dann werden 138 Gew.-Teile Exolit OP 930 (TP) eingerührt, weitere 10 min auf 100°C erhitzt und abgekühlt.

### Beispiel 2

Wie ein Beispiel 1 werden in einem Dreihalsrundkolben mit aufgesetztem Rückflusskühler 13,5 Gew.-Teile Dicyandiamid, 35,4 Gew.-Teile 30%iges wässriges Formaldehyd, 6,9 Gew.-Teile Ammoniumchlorid, 1173,8 Gew.-Teile Wasser, 1,0 Gew.-Teile Ethylendiamin und 138 Gew.-Teile Exolit OP 930 (TP) zur Reaktion gebracht.

### Beispiel 3

Wie ein Beispiel 1 werden in einem Dreihalsrundkolben mit aufgesetztem Rückflusskühler 27 Gew.-Teile Dicyandiamid, 70,8 Gew.-Teile 30%iges wässriges Formaldehyd, 13,8 Gew.-Teile Ammoniumchlorid, 1123,8 Gew.-Teile Wasser, 1,9 Gew.-Teile Ethylendiamin und 138 Gew.-Teile Exolit OP 930 (TP) zur Reaktion gebracht.

### Beispiel 4

Wie ein Beispiel 1 werden in einem Dreihalsrundkolben mit aufgesetztem Rückflusskühler 27 Gew.-Teile Dicyandiamid, 70,8 Gew.-Teile 30%iges wässriges Formaldehyd, 13,8 Gew.-Teile Ammoniumchlorid, 113,8 Gew.-Teile Wasser, 1,9 Gew.-Teile Ethylendiamin und 27,6 Gew.-Teile Exolit OP 930 (TP) zur Reaktion gebracht.

### Beispiel 5

Wie ein Beispiel 1 werden in einem Dreihalsrundkolben mit aufgesetztem Rückflusskühler 27 Gew.-Teile Dicyandiamid, 70,8 Gew.-Teile 30 %iges wässriges Formaldehyd, 13,8 Gew.-Teile Ammoniumchlorid, 143,8 Gew.-Teile Wasser, 1,9 Gew.-Teile Ethylendiamin und 13,8 Gew.-Teile Exolit OP 930 (TP) zur Reaktion gebracht.

### Beispiel 6

In einem Dreihalsrundkolben mit aufgesetztem Rückflusskühler werden 27 Gew.-Teile Dicyandiamid, 70,8 Gew.-Teile 30%iges wässriges Formaldehyd, 13,8 Gew.-Teile Ammoniumchlorid und 13,8 Gew.-Teile Wasser vorgelegt. Es werden 1,9 Gew.-Teile Ethylendiamin unter Rühren zugesetzt und 10 Min auf 90 bis 95°C erhitzt. Dann werden 106 Gew.-Teile Polyaluminiumchlorid-Lösung zugegeben, weitere 10 min auf 100°C erhitzt und schließlich weitere 14,5 Gew.-Teile Natriumdiethylphosphinat-Lösung zugegeben und weitere 10 min auf 100°C erhitzt. Danach wird abgekühlt.

### Beispiel 7

Wie in Beispiel 6 werden 27 Gew.-Teile Dicyandiamid, 70,8 Gew.-Teile 30 %iges wässriges Formaldehyd, 13,8 Gew.-Teile Ammoniumchlorid, 1,9 Gew.-Teile Ethylendiamin, 723,8 Gew.-Teile Wasser, 106 Gew.-Teile Polyaluminiumchlorid-Lösung, 434 Gew.-Teile Natriumdiethylphosphinat-Lösung zur Reaktion gebracht.

### Beispiel 8

In einem Dreihalsrundkolben mit aufgesetztem Rückflusskühler werden 27 Gew.-Teile Dicyandiamid, 70,8 Gew.-Teile 30%iges wässriges Formaldehyd, 13,8 Gew.-Teile Ammoniumchlorid und 13,8 Gew.-Teile Wasser vorgelegt. Es werden 1,9 Gew.-Teile Ethylendiamin unter Rühren zugesetzt und 10 Min auf 90 bis 95°C erhitzt. Dann werden 106 Gew.-Teile Polyaluminiumchlorid-Lösung zugegeben, weitere 10 min auf 100°C erhitzt und schließlich weitere 4,3 Gew.-Teile Diethylphosphinsäure zugegeben und weitere 10 min auf 100°C erhitzt. Danach wird abgekühlt.

### Beispiel 9

Wie in Beispiel 8 werden 27 Gew.-Teile Dicyandiamid, 70,8 Gew.-Teile 30 %iges wässriges Formaldehyd, 13,8 Gew.-Teile Ammoniumchlorid, 1,9 Gew.-Teile Ethylendiamin, 13,8 Gew.-Teile Wasser, 106 Gew.-Teile Polyaluminiumchlorid-Lösung, 129,5 Gew.-Teile Diethylphosphinsäure zur Reaktion gebracht.

### Beispiel 10

Wie in Beispiel 8 werden 27 Gew.-Teile Dicyandiamid, 70,8 Gew.-Teile 30 %iges wässriges Formaldehyd, 13,8 Gew.-Teile Ammoniumchlorid, 1,9 Gew.-Teile Ethylendiamin, 13,8 Gew.-Teile Wasser, 106 Gew.-Teile Polyaluminiumchlorid-Lösung, 215,9 Gew.-Teile Diethylphosphinsäure zur Reaktion gebracht.

### Beispiel 11

In einem Dreihalsrundkolben mit aufgesetztem Rückflusskühler werden 2,7 Gew.-Teile Dicyandiamid, 7,1 Gew.-Teile 30%iges wässriges Formaldehyd, 1,4 Gew.-Teile Ammoniumchlorid und 701,4 Gew.-Teile Wasser vorgelegt. Es werden 0,2 Gew.-Teile Ethylendiamin unter Rühren zugesetzt und 10 Min auf 90 bis 95°C erhitzt. Dann werden 223,9 Gew.-Teile Aluminiumsulfat-Lösung zugegeben, weitere 10 min auf 100°C erhitzt und schließlich weitere 434 Gew.-Teile Natriumdiethylphosphinat-Lösung zugegeben und weitere 10 min auf 100°C erhitzt. Danach wird abgekühlt.

### Beispiel 12

Wie in Beispiel 11 werden 13,5 Gew.-Teile Dicyandiamid, 35,4 Gew.-Teile 30 %iges wässriges Formaldehyd, 6,9 Gew.-Teile Ammoniumchlorid, 1,0 Gew.-Teile Ethylendiamin, 656,9 Gew.-Teile Wasser, 223,9 Gew.-Teile Aluminiumsulfat-Lösung, 434 Gew.-Teile Natriumdiethylphosphinat-Lösung zur Reaktion gebracht.

### Beispiel 13

Wie in Beispiel 11 werden 27 Gew.-Teile Dicyandiamid, 70,8 Gew.-Teile 30 %iges wässriges Formaldehyd, 13,8 Gew.-Teile Ammoniumchlorid, 1,9 Gew.-Teile Ethylendiamin, 603,8 Gew.-Teile Wasser, 223,9 Gew.-Teile Aluminiumsulfat-Lösung, 434 Gew.-Teile Natriumdiethylphosphinat-Lösung zur Reaktion gebracht.

### Beispiel 14

Wie in Beispiel 11 werden 135,2 Gew.-Teile Dicyandiamid, 354 Gew.-Teile 30 %iges wässriges Formaldehyd, 69,2 Gew.-Teile Ammoniumchlorid, 9,7 Gew.-Teile Ethylendiamin, 151,2 Gew.-Teile Wasser, 223,9 Gew.-Teile Aluminiumsulfat-Lösung, 434 Gew.-Teile Natriumdiethylphosphinat-Lösung zur Reaktion gebracht.

### Beispiel 15

Wie in Beispiel 11 werden 135,2 Gew.-Teile Dicyandiamid, 354 Gew.-Teile 30 %iges wässriges Formaldehyd, 69,2 Gew.-Teile Ammoniumchlorid, 9,7 Gew.-Teile Ethylendiamin, 481,9 Gew.-Teile Wasser, 112 Gew.-Teile Aluminiumsulfat-Lösung, 217 Gew.-Teile Natriumdiethylphosphinat-Lösung zur Reaktion gebracht.

### Beispiel 16

Wie in Beispiel 11 werden 27 Gew.-Teile Dicyandiamid, 70,8 Gew.-Teile 30 %iges wässriges Formaldehyd, 13,8 Gew.-Teile Ammoniumchlorid, 1,9 Gew.-Teile Ethylendiamin, 603,8 Gew.-Teile Wasser, 223,9 Gew.-Teile Aluminiumsulfat-Lösung, 43,4 Gew.-Teile Natriumdiethylphosphinat-Lösung zur Reaktion gebracht.

### Beispiel 17

Eine Zweikomponenten-Imprägnierlösung wird wie folgt hergestellt.

Komponente 1: In einem Dreihalsrundkolben mit aufgesetztem Rückflusskühler werden 2,7 Gew.-Teile Dicyandiamid, 7,1 Gew.-Teile 30%iges wässriges Formaldehyd, 1,4 Gew.-Teile Ammoniumchlorid und 201,4 Gew.-Teile Wasser vorgelegt. Es werden 0,2 Gew.-Teile Ethylendiamin unter Rühren zugesetzt und 10 Min auf 90 bis 95°C erhitzt. Dann werden 223,9 Gew.-Teile Aluminiumsulfat-Lösung zugegeben, weitere 10 min auf 100°C erhitzt. Danach wird abgekühlt.

Komponente 2: 434 Gew.-Teile Natriumdiethylphosphinat-Lösung werden mit 500 Gew.-Teilen Wasser gemischt.

### Beispiel 18

Eine Zweikomponenten-Imprägnierlösung wird wie folgt hergestellt.
Komponente 1: Wie in Beispiel 17 werden 27 Gew.-Teile Dicyandiamid, 70,8 Gew.-Teile 30%iges wässriges Formaldehyd, 13,8 Gew.-Teile Ammoniumchlorid, 1,9 Gew.-Teile Ethylendiamin, 103,8 Gew.-Teile Wasser und 223,9 Gew.-Teile Aluminiumsulfat-Lösung zur Reaktion gebracht.
Komponente 2: 434 Gew.-Teile Natriumdiethylphosphinat-Lösung werden mit 500 Gew.-Teile Wasser gemischt.

### Beispiel 19

Eine Zweikomponenten-Imprägnierlösung wird wie folgt hergestellt.
Komponente 1: Wie in Beispiel 17 werden 135,2 Gew.-Teile Dicyandiamid, 354 Gew.-Teile 30%iges wässriges Formaldehyd, 69,2 Gew.-Teile Ammoniumchlorid, 9,7 Gew.-Teile Ethylendiamin, 481,9 Gew.-Teile Wasser und 112 Gew.-Teile Aluminiumsulfat-Lösung zur Reaktion gebracht.
Komponente 2: 217 Gew.-Teile Natriumdiethylphosphinat-Lösung in Originalkonzentration.

### Beispiel 20

Eine Dreikomponenten-Imprägnierlösung wird wie folgt hergestellt.
Komponente 1: In einem Dreihalsrundkolben mit aufgesetztem Rückflusskühler werden 27 Gew.-Teile Dicyandiamid, 70,8 Gew.-Teile 30%iges wässriges Formaldehyd, 13,8 Gew.-Teile Ammoniumchlorid und 603,8 Gew.-Teile Wasser vorgelegt. Es werden 1,9 Gew.-Teile Ethylendiamin unter Rühren zugesetzt und 10 Min auf 90 bis 95°C erhitzt. Danach wird abgekühlt.
Komponente 2: 223,9 Gew.-Teile Aluminiumsulfat-Lösung in Originalkonzentration.
Komponente 3: 434 Gew.-Teile Natriumdiethylphosphinat-Lösung in Originalkonzentration.

### Beispiel 21

In einem Dreihalsrundkolben mit aufgesetztem Rückflusskühler werden 2,7 Gew.-Teile Dicyandiamid, 7,1 Gew.-Teile 30%iges wässriges Formaldehyd, 1,4 Gew.-Teile Ammoniumchlorid und 366,4 Gew.-Teile Wasser vorgelegt. Es werden 0,2 Gew.-Teile Ethylendiamin unter Rühren zugesetzt und 10 Min auf 90 bis 95°C erhitzt. Dann werden weitere 39,3 Gew.-Teile Diethylphosphinsäure zugegeben und weitere 10 min auf 100°C erhitzt. Danach wird abgekühlt.

### Beispiel 22

Wie in Beispiel 21 werden 27 Gew.-Teile Dicyandiamid, 70,8 Gew.-Teile 30 %iges wässriges Formaldehyd, 13,8 Gew.-Teile Ammoniumchlorid, 1,9 Gew.-Teile Ethylendiamin, 263,8 Gew.-Teile Wasser und 39,3 Gew.-Teile Diethylphosphinsäure zur Reaktion gebracht.

### Beispiel 23

Wie in Beispiel 21 werden 27 Gew.-Teile Dicyandiamid, 70,8 Gew.-Teile 30 %iges wässriges Formaldehyd, 13,8 Gew.-Teile Ammoniumchlorid, 1,9 Gew.-Teile Ethylendiamin, 263,8 Gew.-Teile Wasser und 3,9 Gew.-Teile Diethylphosphinsäure zur Reaktion gebracht.

### Beispiel 24

In einem Dreihalsrundkolben mit aufgesetztem Rückflusskühler werden 27 Gew.-Teile Dicyandiamid, 70,8 Gew.-Teile 30%iges wässriges Formaldehyd und 273,8 Gew.-Teile Wasser vorgelegt. Mit Natriumhydroxid wird ein pH-Wert von 10 eingestellt und auf 90 bis 95°C erhitzt und 10 Min dort gerührt. Dann werden weitere 39,3 Gew.-Teile Diethylphosphinsäure zugegeben und weitere 10 min auf 100°C erhitzt. Danach wird abgekühlt.

### Beispiel 25

Eine Faserstoffsuspension aus gebleichtem Birkensulfatzellstoff und Kiefernsulfatzellstoff im Gewichtsverhältnis 1:1 in Wasser von 10°dH (deutsche Härtegrade), die einen Feststoffgehalt von 0,5 Gew.-% aufweist, wird mit 20 Gew.-% Kreide als Füllmittel und hierauf mit 0,01 Gew.-% Percol 292 (kationisches Polyacrylamid (MG >1*10⁷)) als Hilfsmittel zum Zurückhalten feinster Zellstofffaserteilchen versetzt. Die Kreide- und Hilfsmittelmengen beziehen sich auf den Feststoffgehalt der Faserstoffsuspension. Weiterhin werden auf 100 Teile Suspension 0,9 Teile Flammschutzmittel aus Beispiel 2 und 0,25 Gew.-% Aktivsubstanz Polymin^{R} P (Polyethylenimin mit einem Molekulargewicht of 10.000 to 100.000) als Retentionsmittel zugesetzt.

Auf einem Rapid-Köthen-Laborblattbildner werden unter Zusatz der in Tabelle 1 angegebenen Leimungsmittel aus 100 Gew.-% gebleichtem Fichtensulfitzellstoff Normblätter mit einem Flächengewicht von 80 g/qm hergestellt. Die Blätter werden dann 3min bei 120°C getrocknet.

Der Flammschutzmittelgehalt liegt bei ca. 15 Gew.-%, der Phosphorgehalt bei ca. 3,1 Gew.-%.

### Brandtests

Papierstreifen (Breite 1 cm, Länge 20cm) werden zum Schutz vor Zugluft um 45° geneigt in einer Verbrennungskammer befestigt. Ein Ende wird 5 sec mit der Spitze einer 15 cm langen nicht leuchtenden Bunsenbrennerflamme (Erdgas) angebrannt. Es wird die Nachbrennzeit aufgenommen.

### Beispiel 25a

Analog zu Beispiel 25 werden 1g Flammschutzmittel aus Beispiel 1 zu einer Faserstoffsuspension gegeben und Normblätter mit einem Flammschutzmittelgehalt von ca. 15 Gew.-% und einem Phosphorgehalt von ca. 3,1 Gew.-% hergestellt.

### Beispiel 26

Analog zu Beispiel 25 werden 0,8g Flammschutzmittel aus Beispiel 3 zu einer Faserstoffsuspension gegeben und Normblätter mit einem Flammschutzmittelgehalt von ca. 15 Gew.-% und einem Phosphorgehalt von ca. 2,7 Gew.-% hergestellt.

### Beispiel 27

Analog zu Beispiel 25 werden 0,1g Flammschutzmittel aus Beispiel 4 zu einer Faserstoffsuspension gegeben und Normblätter mit einem Flammschutzmittelgehalt von ca. 5 Gew.-% und einem Phosphorgehalt von ca. 0,4 Gew.-% hergestellt.

### Beispiel 27a

Analog zu Beispiel 25 werden 0,45g Flammschutzmittel aus Beispiel 5 zu einer Faserstoffsuspension gegeben und Normblätter mit einem Flammschutzmittelgehalt von ca. 15 Gew.-% und einem Phosphorgehalt von ca. 0,8 Gew.-% hergestellt.

### Beispiel 27b

Analog zu Beispiel 25 werden 0,5g Flammschutzmittel aus Beispiel 6 zu einer Faserstoffsuspension gegeben und Normblätter mit einem Flammschutzmittelgehalt von ca. 15 Gew.-% und einem Phosphorgehalt von ca. 0,3 Gew.-% hergestellt.

### Beispiel 28

Analog zu Beispiel 25 werden 0,8 g Flammschutzmittel aus Beispiel 7 zu einer Faserstoffsuspension gegeben und Normblätter mit einem Flammschutzmittelgehalt von ca. 15 Gew.-% und einem Phosphorgehalt von ca. 2,7 Gew.-% hergestellt.

### Beispiel 28a

Analog zu Beispiel 25 werden 3g Flammschutzmittel aus Beispiel 8 zu einer Faserstoffsuspension gegeben und Normblätter mit einem Flammschutzmittelgehalt von ca. 53 Gew.-% und einem Phosphorgehalt von ca. 0,1 Gew.-% hergestellt.

### Beispiel 29

Analog zu Beispiel 25 werden 0,2g Flammschutzmittel aus Beispiel 9 zu einer Faserstoffsuspension gegeben und Normblätter mit einem Flammschutzmittelgehalt von ca. 14 Gew.-% und einem Phosphorgehalt von ca. 2,6 Gew.-% hergestellt.

### Beispiel 30

Analog zu Beispiel 25 werden 1 g Flammschutzmittel aus Beispiel 11 zu einer Faserstoffsuspension gegeben und Normblätter mit einem Flammschutzmittelgehalt von ca. 15 Gew.-% und einem Phosphorgehalt von ca. 3,4 Gew.-% hergestellt.

### Beispiel 31

Analog zu Beispiel 25 werden 0,8g Flammschutzmittel aus Beispiel 13 zu einer Faserstoffsuspension gegeben und Normblätter mit einem Flammschutzmittelgehalt von ca. 15 Gew.-% und einem Phosphorgehalt von ca. 2,7 Gew.-% hergestellt.

### Beispiel 32

Analog zu Beispiel 25 werden 0,5g Flammschutzmittel aus Beispiel 15 zu einer Faserstoffsuspension gegeben und Normblätter mit einem Flammschutzmittelgehalt von ca. 16 Gew.-% und einem Phosphorgehalt von ca. 0,8 Gew.-% hergestellt.

### Beispiel 32a

Analog zu Beispiel 25 werden 1 g Flammschutzmittel aus Beispiel 17 zu einer Faserstoffsuspension gegeben und Normblätter mit einem Flammschutzmittelgehalt von ca. 15 Gew.-% und einem Phosphorgehalt von ca. 3,4 Gew.-% hergestellt.

### Beispiel 32b

Analog zu Beispiel 25 werden 0,8 g Flammschutzmittel aus Beispiel 18 zu einer Faserstoffsuspension gegeben und Normblätter mit einem Flammschutzmittelgehalt von ca. 15 Gew.-% und einem Phosphorgehalt von ca. 2,7 Gew.-% hergestellt.

### Beispiel 33

Analog zu Beispiel 25 werden 0,5g Flammschutzmittel aus Beispiel 22 zu einer Faserstoffsuspension gegeben und Normblätter mit einem Flammschutzmittelgehalt von ca. 15 Gew.-% und einem Phosphorgehalt von ca. 6,7 Gew.-% hergestellt.

### Beispiel 34

Analog zu Beispiel 25 werden 0,5g Flammschutzmittel aus Beispiel 24 zu einer Faserstoffsuspension gegeben und Normblätter mit einem Flammschutzmittelgehalt von ca. 15 Gew.-%, der Phosphorgehalt von ca. 6,8 Gew.-% hergestellt.

### Beispiel 35

Nach US-4 219 456 Bsp. 16 werden Papierstreifen (80 g/qm, Breite 1cm, Länge 20cm) für 1 Minute in eine 6%ige Beschichtungslösung getaucht, abtropfen lassen und bei 110°C für 10 Minuten getrocknet. Der Flammschutzmittelgehalt (Gewichtszunahme bezogen auf Trockensubstanz) beträgt ca. 15 Gew.-%, der Phosphorgehalt 3,1 Gew.-%.

### Beispiel 36

Eine Beschichtungslösung 1, die auf Komponente 1 des Beispiels 18 basiert, wird hergestellt, indem Komponente 1 aus Beispiel 18 mit demineralisiertem Wasser 1 zu 1 verdünnt wird.
Eine Beschichtungslösung 2, die auf Komponente 2 des Beispiels 18 basiert, wird hergestellt, indem Komponente 2 aus Beispiel 18 mit demineralisiertem Wasser 1 zu 1 verdünnt wird.

Nach Beispiel 35 werden Papierstreifen (80 g/qm, Breite 1cm, Länge 20 cm) für 1 Minute in eine Beschichtungslösung 1 getaucht, abtropfen lassen und bei 110°C für 10 Minuten getrocknet. Dann wird der Papierstreifen 1 Minute in eine Beschichtungslösung 2 getaucht, abtropfen lassen und bei 110°C für 10 Minuten getrocknet.

Der Flammschutzmittelgehalt (Gewichtszunahme bezogen auf Trockensubstanz) beträgt ca. 15 Gew.-%, der Phosphorgehalt 2,7 Gew.-%.

### Beispiel 37

Eine Beschichtungslösung, die auf Komponente 1 des Beispiels 22 basiert, wird hergestellt, indem die Flammschutzmittellösung aus Beispiel 22 mit demineralisiertem Wasser 1 zu 2,5 verdünnt wird.

Nach Beispiel 35 werden Papierstreifen (80 g/qm, Breite 1cm, Länge 20cm) für 1 Minute in die Beschichtungslösung getaucht, abtropfen lassen und bei 110°C für 10 Minuten getrocknet. Der Flammschutzmittelgehalt (Gewichtszunahme bezogen auf Trockensubstanz) beträgt ca. 15 Gew.-%, der Phosphorgehalt 6,7 Gew.-%.

### Textilien

### Brandtests

Die Textilproben wurden vertikal aufgehängt. Eine Bunsenbrennerflamme von vier cm Höhe wurde unter der jeder Textilprobe 10sec lang angebracht. Während des Brandtests wurde untersucht, ob sichtbare Flammen aus der Probe entwichen. Nach entfernen der Flamme wurde untersucht ob die Textilien Feuer fingen und/oder weiterglommen. Die Höhe der verkohlten Fläche wurde in Millimeter gemessen von der untersten Kante der Probe bis zur oberen Begrenzung der verkohlten Fläche.

### Beispiel 38 Vergleich

Baumwollgewebestücke (100*115 mm und 140 g/qm Flächengewicht) werden nach WO 98/24604 Bsp. BB in eine Imprägnierlösung aus 1,35 Gew.-% Dicyandiamid, 11,6 Gew.-% Monoammoniumphosphat, 1,87 Gew.-% Phosphorsäure, 0,11 Gew.-% Magnesiumhydroxid, 0,13 Gew.-% Ammoniumcarbonat, 0,04 Gew.-% Additiv und 85 Gew.-% Wasser eingetaucht und eingeweicht. Die Imprägnierlösung enthält 15 Gew.-% Aktivsubstanz. Nach dem Einweichprozess werden die Gewebestücke ausgequetscht und bei 110°C in einem Trockenschrank getrocknet. Die Gewichtszunahme durch die Imprägnierung beträgt 10 Gew.-% der Phosphorgehalt 2,1 Gew.-%. Die Gewebeprobe wird auf Ihr Brennverhalten untersucht. Sie fängt kein Feuer, glüht nicht nach, erzeugt keinen Rauch und die verrußte Fläche beträgt 53 mm (Durchmesser).

### Beispiel 39

Eine Beschichtungslösung, wird hergestellt, indem 8,3 g der Flammschutzmittellösung aus Beispiel 22 mit demineralisiertem Wasser auf 100 g auffüllt.

Analog zu Beispiel 38 werden Textilstücke mit der Beschichtungslösung getränkt und getrocknet. Der Flammschutzmittelgehalt (Gewichtszunahme bezogen auf Trockensubstanz) beträgt ca. 4,6 Gew.-%, der Phosphorgehalt 2,1 Gew.-%. Die Gewebeprobe wird auf Ihr Brennverhalten untersucht. Sie fängt kein Feuer, glüht nicht nach, erzeugt keinen Rauch und die verrußte Fläche beträgt 44 mm (Durchmesser).

### Beispiel 40

Eine Beschichtungslösung, wird hergestellt, indem 21,2 g der Flammschutzmittellösung aus Beispiel 7 mit demineralisiertem Wasser auf 100 g auffüllt werden.

Analog zu Beispiel 38 werden Textilstücke mit der Beschichtungslösung getränkt und getrocknet. Der Flammschutzmittelgehalt (Gewichtszunahme bezogen auf Trockensubstanz) beträgt ca. 12 Gew.-%, der Phosphorgehalt 2,1 Gew.-%. Die Gewebeprobe wird auf ihr Brennverhalten untersucht. Sie fängt kein Feuer, glüht nicht nach, erzeugt keinen Rauch und die verrußte Fläche beträgt 39 mm (Durchmesser).

### Holz

### Brandtests

Nach zweitägigem Trocknen werden die Bretter aus einem Abstand von 14 cm Hitze ausgesetzt mit einer Intensität von 1 cal*cm⁻²*sec⁻¹. Eine Gasflamme an dem Brett entzündet die aus dem Brett freiwerdenden brennbaren Gase.

### Beispiel 41

Entsprechend GB 1 055 555 Bsp. 2 werden Fichtenholzbretter (10x10x2 cm) mit einer Schicht (400 g/m², entspricht ca. 0,5 Gew.-% Phosphor bezogen auf die Masse Brett plus Beschichtung) einer Zweikomponenten-Flammschutzmittelformulierung auf Basis Dicyandiamid-Formaldehyd-Harz bestrichen. Die Zündzeit war im Durchschnitt 10 bis 11 min. Unbehandelte Fichtenbretter führten bereits nach 25 - 35 sec zur Entzündung.

### Beispiel 42

Wie in Beispiel 41 werden Fichtenbretter mit einer Schicht (325 g/m2, entspricht ca. 0,5 Gew.-% Phosphor bezogen auf die Masse Brett plus Beschichtung) der Flammschutzformulierung aus Beispiel 13 bestrichen. Die Zündzeit war im Durchschnitt 15 min.

### Beispiel 43

Wie in Beispiel 41 werden Fichtenbretter mit einer Schicht (500 g/m2, entspricht ca. 0,5 Gew.-% Phosphor bezogen auf die Masse Brett plus Beschichtung) der Flammschutzformulierung aus Beispiel 22 bestrichen. Die Zündzeit war im Durchschnitt 16 min.

### Beispiel 44

Fichtenholzbretter (10x10x2 cm) mit einem Feuchtigkeitsgehalt von 19 Gew.-% werden in einen Autoklav geschichtet. Die Imprägnierungslösung aus Beispiel 13 wird in den Autoklav gefüllt und dieser über eine elektrische Außenheizung 60 min auf 6,9 bar erhitzt. Danach wird die Imprägnierungslösung abgelassen, die Bretter abtropfen lassen und bei Raumtemperatur über einen Zeitraum von 5 Tagen auf einen Feuchtegehalt von unter 19 Gew.-% getrocknet. Es wurden etwa 3g Flammschutzmittel aufgenommen. Die Zündzeit war im Durchschnitt 16 min.

### Beispiel 45

Analog zu Beispiel 44 werden Fichtenholzbretter mit der Imprägnierungslösung aus Beispiel 22 in einem Autoklav imprägniert. Es wurden etwa 5 g Flammschutzmittel aufgenommen. Die Zündzeit war im Durchschnitt 14 min.

### Beispiel 46

Eine Natriumdiphenylphosphinatlösung wird hergestellt, indem man in 281,3 Gew.-Teilen Wasser zunächst 42,4 Gew.-Teile Natriumhydroxid und danach 231,5 Gew.-Teile Diphenylphosphinsäure löst.

In einem Dreihalsrundkolben mit aufgesetztem Rückflusskühler werden 27 Gew.-Teile Dicyandiamid, 70,8 Gew.-Teile 30%igem wässrigem Formaldehyd, 13,8 Gew.-Teile Ammoniumchlorid und 604,6 Gew.-Teile Wasser vorgelegt. Es werden 1,9 Gew.-Teile Ethylendiamin unter Rühren zugesetzt und 10 Min auf 90 bis 95°C erhitzt. Dann werden 224 Gew.-Teile Aluminiumsulfat-Lösung zugegeben, weitere 10 min auf 100°C erhitzt und schließlich die gesamte Menge der Natriumdiphenylphosphinatlösung zugegeben und weitere 10 min auf 100°C erhitzt. Danach wird abgekühlt.

### Beispiel 47

In einem Dreihalsrundkolben mit aufgesetztem Rückflusskühler werden 27 Gew.-Teile Dicyandiamid, 70,8 Gew.-Teile 30%igem wässrigem Formaldehyd, 13,8 Gew.-Teile Ammoniumchlorid und 640,7 Gew.-Teile Wasser vorgelegt. Es werden 1,9 Gew.-Teile Ethylendiamin unter Rühren zugesetzt und 10 Min auf 90 bis 95°C erhitzt. Dann werden 203,5 Gew.-Teile Zinksulfatheptahydrat zugegeben, weitere 10 min auf 100°C erhitzt und schließlich 434 Gew.-Teile Natriumdiethylphosphinat-Lösung zugegeben und weitere 10 min auf 100°C erhitzt. Danach wird abgekühlt.

### Beispiel 48

In einem Dreihalsrundkolben mit aufgesetztem Rückflusskühler werden 27 Gew.-Teile Dicyandiamid, 70,8 Gew.-Teile 30%igem wässrigem Formaldehyd, 13,8 Gew.-Teile Ammoniumchlorid und 707,6 Gew.-Teile Wasser vorgelegt. Es werden 1,9 Gew.-Teile Ethylendiamin unter Rühren zugesetzt und 10 Min auf 90 bis 95°C erhitzt. Dann werden vorsichtig 50,3 Teile Titantetrachlorid zudosiert, gefolgt von 42,4 Gew.-Teilen Natriumhydroxid, dann wird weitere 10 min auf 100°C erhitzt und schließlich 162,7 Gew.-Teile Natriumdiethylphosphinat-Lösung zugegeben und weitere 10 min auf 100°C erhitzt. Danach wird abgekühlt.

Der technische Vorteil des erfindungsgemäßen phosphorhaltigen Flammschutzmittels ist die geringere Löslichkeit in Wasser im Vergleich zu Ammoniumphosphat-basierenden Flammschutzmitteln.

### Substanzen

- Percol 292: Fa. Twinrocker, Brookston, Indiana, USA
- Polyamin P: Fa. BASF
- Dicyandiamid: Fa. Lancaster
- Formaldehyd 30 Gew.-% wässr.: Fa. Lancaster
- Ammoniumchlorid: Fa. Merck KgaA
- Ethylendiamin: Fa. Lancaster
- Polyaluminiumhydroxychlorid: Fa. Oker Chemie GmbH
- Aluminiumsulfat-Lösung: Fa. Eka Chemicals Düren
- 4,26 Gew.-% Al:
- Exolit OP 930 (TP): Fa. Clariant
- Diethylphosphinsäure, Al-Salz:
- Zinksulfatheptahydrat: Fa. Lancaster
- Titantetrachlorid: Fa. Lancaster

**Tabelle 1**

| Bsp. | Dicyandiamid | Formaldehyd | Ammoniumchlorid | Ethylendiamin | Wasser | Polyaluminium-hydroxychlorid | Aluminiumsulfat | Diethylphosphinsäure | Diethylphosphinsäure, Na-Salz | Diethylphosphinsäure, Al-Salz |
|---|---|---|---|---|---|---|---|---|---|---|
| | Gew.-T. | Gew.-T. | Gew.-T. | Gew.-T. | Gew.-T. | Gew.-T. | Gew.-T. | Gew.-T. | Gew.-T. | Gew.-T. |
| 1 | 2,7 | 7,1 | 1,4 | 0,2 | 1223,8 | - | - | - | - | 138,0 |
| 2 | 13,5 | 35,4 | 6,9 | 1,0 | 1173,8 | - | - | - | - | 138,0 |
| 3 | 27,0 | 70,8 | 13,8 | 1,9 | 1123,8 | - | - | - | - | 138,0 |
| 4 | 27,0 | 70,8 | 13,8 | 1,9 | 113,8 | - | - | - | - | 27,6 |
| 5 | 27,0 | 70,8 | 13,8 | 1,9 | 143,8 | - | - | - | - | 13,8 |
| 6 | 27,0 | 70,8 | 13,8 | 1,9 | 13,8 | 106,0 | - | - | 14,5 | - |
| 7 | 27,0 | 70,8 | 13,8 | 1,9 | 723,8 | 106,0 | - | - | 434,0 | - |
| 8 | 27,0 | 70,8 | 13,8 | 1,9 | 13,8 | 106,0 | - | 4,3 | - | - |
| 9 | 27,0 | 70,8 | 13,8 | 1,9 | 13,8 | 106,0 | - | 129,5 | - | - |
| 10 | 27,0 | 70,8 | 13,8 | 1,9 | 13,8 | 106,0 | - | 215,9 | - | - |
| 11 | 2,7 | 7,1 | 1,4 | 0,2 | 701,4 | - | 223,9 | - | 434,0 | - |
| 12 | 13,5 | 35,4 | 6,9 | 1,0 | 656,9 | - | 223,9 | - | 434,0 | - |
| 13 | 27,0 | 70,8 | 13,8 | 1,9 | 603,8 | - | 223,9 | - | 434,0 | - |
| 14 | 135,2 . | 354,0 | 69,2 | 9,7 | 151,9 | - | 223,9 | - | 434,0 | - |
| 15 | 135,2 | 354,0 | 69,2 | 9,7 | 481,9 | - | 112,0 | - | 217,0 | - |
| 16 | 27,0 | 70,8 | 13,8 | 1,9 | 603,8 | - | 223,9 | - | 43,4 | - |
| 17a | 2,7 | 7,1 | 1,4 | 0,2 | 201,4 | - | 223,9 | - | - | - |
| 17b | - | - | - | - | 500,0 | - | - | - | 434,0 | - |
| 18a | 27,0 | 70,8 | 13,8 | 1,9 | 103,8 | - | 223,9 | - | - | - |
| 18b | - | - | - | - | 500,0 | | - | - | 434,0 | - |
| 19a | 135,2 | 354,0 | 69,2 | 9,7 | 481,9 | - | 112,0 | - | - | - |
| 19b | - | - | - | - | - | - | - | - | 217,0 | - |
| 20a | 27,0 | 70,8 | 13,8 | 1,9 | 603,8 | - | - | - | - | - |
| 20b | - | - | - | - | - | - | 223,9 | - | - | - |
| 20c | - | - | - | - | - | - | - | - | 434,0 | - |
| 21 | 2,7 | 7,1 | 1,4 | 0,2 | 366,4 | - | - | 39,3 | - | - |
| 22 | 27,0 | 70,8 | 13,8 | 1,9 | 263,8 | - | - | 39,3 | - | - |
| 23 | 27,0 | 70,8 | 13,8 | 1,9 | 263,8 | - | - | 3,9 | - | - |
| 24 | 27,0 | 70,8 | 0,0 | 0,0 | 273,8 | - | - | 39,3 | - | - |

**Tabelle 2**

| Bsp. | FSM aus Bsp. | Phosphor im Papier/Textil | Brenndauer | Löslichkeit | Aufblähen |
|---|---|---|---|---|---|
| | | % | s | % | |
| 25 | Bsp. 2 | 3,1 | 2 | 0,1 | nein |
| 25a | Bsp. 1 | 3,4 | - | 0,2 | nein |
| 26 | Bsp. 3 | 2,7 | 2 | - | - |
| 27 | Bsp. 4 | 0,4 | 4 | - | - |
| 27a | Bsp. 5 | 0,8 | - | 0,3 | nein |
| 27b | Bsp. 6 | 0,3 | - | 0,1 | nein |
| 28 | Bsp. 7 | 2,6 | - | - | - |
| 28a | Bsp. 8 | 0,1 | - | 0,2 | nein |
| 29 | Bsp. 9 | 0,4 | - | - | - |
| 30 | Bsp. 11 | 3,4 | - | - | - |
| 31 | Bsp. 13 | 2,7 | 2 | - | - |
| 32 | Bsp. 15 | 0,8 | - | - | - |
| 32a | Bsp. 17 | 3,4 | - | 0,3 | nein |
| 32b | Bsp. 18 | 2,7 | - | 0,2 | nein |
| 33 | Bsp. 22 | 6,7 | 2 | - | - |
| 34 | Bsp. 24 | 6,8 | - | - | - |
| 35 | US-4 219 456 Bsp. 16 | 3,1 | 6 | - | - |
| 36 | Bsp. 18 | 2,7 | - | - | - |
| 37 | Bsp. 22 | 6,7 | - | - | - |
| 38 | WO 98/24604 Bsp. BB | 2,1 | - | - | - |
| 39 | 22 | 2,1 | - | - | - |
| 40 | Bsp. 7 | 2,1 | - | - | - |

**Tabelle 3**

| Bsp. | | 41 | 42 | 43 | 44 | 45 |
|---|---|---|---|---|---|---|
| FSM-Formulierung aus | | Vergleich | Bsp. 13 | Bsp. 22 | Bsp. 13 | Bsp. 22 |
| Auflage FSM 100 Gew.-% | g | - | - | - | 3 | 5 |
| Auflage FSM 100 | g/m2 | 400 | 325 | 501 | 325 | 501 |
| P-gehalt (Brett+FSM) | Gew.-% | 0,5 | 0,5 | 0,5 | 0,5 | 0,5 |

**Tabelle 4**

| Bsp. | Dicyandiamid | Formaldehyd | Ammoniumchlorid | Ethylendiamin | Wasser | Aluminiumsulfat | Zinksulfat-heptahydrat | Titantetrachlorid | Diphenylphosphinsäure | NaOH | Wasser | Diethylphosphinsäure, Na-Salz |
|---|---|---|---|---|---|---|---|---|---|---|---|---|
| | Gew.-T. | Gew.-T. | Gew.-T. | Gew.-T. | Gew.-T. | Gew.-T. | Gew.-T. | Gew.-T. | Gew.-T. | Gew.-T. | Gew.-T. | Gew.-T. |
| 46 | 27,0 | 70,8 | 13,8 | 1,9 | 604,6 | 224,0 | - | - | 231,5 | 42,4 | 281,3 | - |
| 47 | 27,0 | 70,8 | 13,8 | 1,9 | 640,7 | - | 203,5 | - | - | - | - | 434,0 |
| 48 | 27,0 | 70,8 | 13,8 | 1,9 | 707,6 | - | - | 50,3 | - | 42,4 | - | 162,7 |

## Patentansprüche

1. Verwendung einer phosphorhaltigen Flammschutzmittelformulierung, bestehend aus
0,1 bis 99,9 Gew.-% eines Harzes einer organischen Stickstoffverbindung, **dadurch gekennzeichnet, dass** es sich dabei um Urethane, Cyanamid, Dicyandiamid, Anilin, Sulfonamid, Biuret, Allantoin, Tolyltriazol, Benzotriazol, 2-Amino-4-methylpyrimidin, Hydantoin, substituierte Hydantoinderivaten, Malonsäureamidamidin, Ethylen-bis-5-triazon, Glycinanhydrid und beliebige Mischungen davon handelt, und
0,1 bis 99,9 Gew.-% eines phosphorhaltigen Flammschutzmittels, **dadurch gekennzeichnet, dass** es sich bei dem phosphorhaltigen Flammschutzmittel um ein partikuläres oder ein nicht-partikuläres phosphorhaltiges Flammschutzmittel handelt und es sich bei dem partikulären phosphorhaltigen Flammschutzmittel um ein Phosphinsäuresalz der Formel (I) und/oder ein Diphosphinsäuresalz der Formel (II) und/oder deren Polymere 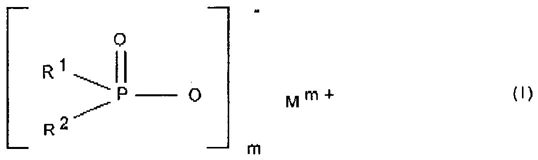 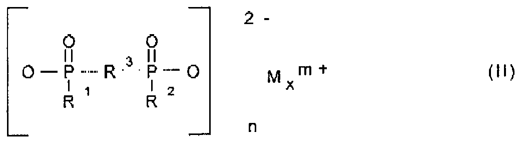 worin
R¹, R² gleich oder verschieden sind und C₁-C₆-Alkyl, linear oder verzweigt und/oder Aryl; R³ C₁-C₁₀-Alkylen, linear oder verzweigt, C₆-C₁₀-Arylen, -Alkylarylen oder
- Arylalkylen; M Mg, Ca, Al, Sb, Sn, Ge, Ti, Fe, Zr, Ce, Bi, Sr, Mn, Li und/oder eine protonierte Stickstoffbase; m 1 bis 4; n 1 bis 4; x 1 bis 4 bedeuten und es sich bei dem nicht-partikulären phosphorhaltigen Flammschutzmittel um ein Phosphinsäure und/oder -salz der Formel (I) und/oder ein Diphosphinsäure und/oder
- salz der Formel (II) und/oder deren Polymere handelt, worin R¹, R² und R³ die genannte Bedeutung haben und M Na, K oder H, sowie
m 1;
n 1;
x 1 bedeuten, handelt, zur Flammschutzausrüstung von Papier, Pappe, Karton, Textilien, Holz und anderen cellulosehaltigen Materialen, **dadurch gekennzeichnet, dass** bei der Masseleimung von Papier, Pappe oder Karton die phosphorhaltige Flammschutzmittelformulierung zur Faserstoffsuspension zugegeben wird; für die Flammschutzausrüstung von Textilien die phosphorhaltige Flammschutzmittetformulierung in Form einer Imprägnierlösung auf die Textilien aufgebracht wird; für die Flammschutzausrüstung von Holz das Holz in eine Imprägnierungsanlage gebracht wird und für mindestens 20 Minuten einem Druck von 50 mbar ausgesetzt wird, wobei das Holz bei einem Druck von 16 bar für 1 bis 10 Stunden mit einer Imprägnierungslösung, welche die phosphorhaltige Flammschutzmittelformulierung der Ansprüche 1 bis 12 enthält, imprägniert wird; oder für die Flammschutzausrüstung von Holz das Holz durch Tauch-, Sprüh- oder Streichverfahren, wobei die Beschichtungskomponente die phosphorhaltige Flammschutzmittelformulierung enthält, beschichtet wird.

2. Verwendung nach Anspruch 1, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

3. Verwendung nach Anspruch 1 oder 2, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethylphenylen, tert.-Butylphenylen, Methyl-naphthylen, Ethyl-naphthylen oder tert.-Butylnaphthylen; Phenyl-methylen, Phenyl-ethylen, Phenyl-propylen oder Phenylbutylen bedeutet.

4. Verwendung nach einem oder mehreren der Ansprüche 1 bis 3, **dadurch gekennzeichnet, dass** es sich um eine einkomponentige Flammschutzmittelformulierung handelt, die aus 18,8 bis 69,9 Gew.-% eines Harzes einer organischen Stickstoffverbindung und 81,2 bis 30,1 Gew.-% partikulärem phosphorhaltigen Flammschutzmittel besteht.

5. Verwendung nach einem oder mehreren der Ansprüche 1 bis 4, **dadurch gekennzeichnet, dass** die mittlere Teilchengröße d₅₀ des partikulären Flammschutzmittels 1 nm bis 5 mm, bevorzugt 100 nm bis 100 µm und besonders bevorzugt 1 bis 20 µm beträgt.

6. Verwendung nach einem oder mehreren der Ansprüche 1 bis 5, **dadurch gekennzeichnet, dass** die phosphorhaltige Flammschutzmittelformulierung eine Aluminium-, Titan-, Zink-, Zinn- und/oder Zirkonium-Verbindung enthält.

7. Verwendung nach einem oder mehreren der Ansprüche 1 bis 6, **dadurch gekennzeichnet, dass** es sich um eine einkomponentige Flammschutzmittelformulierung handelt, die aus 18,8 bis 69,9 Gew.-% eines Harzes einer organischen Stickstoffverbindung und 81,2 bis 30,1 Gew.-% nichtpartikulärem phosphorhaltigen Flammschutzmittel besteht.

8. Verwendung nach einem oder mehreren der Ansprüche 1 bis 3, **dadurch gekennzeichnet, dass** es sich um eine zweikomponentige phosphorhaltige Flammschutzmittelformulierung handelt, die aus 0,1 bis 99,9 Gew.-% einer Komponente A und 0,1 bis 99,9 Gew.-% einer Komponente B besteht, wobei die Komponente A aus 0,1 bis 99,9 Gew.-% Harz einer organischen Stickstoffverbindung und 0,1 bis 99,9 Gew.-% nichtpartikulärem phosphorhaltiges Flammschutzmittel besteht und die Komponente B eine Aluminium- und/oder Titan- und/oder Zink- und/oder Zinn- und/oder Zirkonium-Verbindung ist.

9. Verwendung nach Anspruch 8, **dadurch gekennzeichnet, dass** es sich um eine zweikomponentige phosphorhaltige Flammschutzmittelformulierung handelt, die aus 68,9 bis 87,9 Gew.-% einer Komponente A und 31,1 bis 12,1 Gew.-% einer Komponente B besteht, wobei die Komponente A aus 93,7 bis 1,5 Gew.-% Harz einer organischen Stickstoffverbindung und 6,3 bis 98,5 Gew.-% nichtpartikulärem phosphorhaltiges Flammschutzmittel besteht und die Komponente B eine Aluminium- und/oder Titan- und/oder Zink- und/oder Zinn- und/oder Zirkonium-Verbindung ist.

10. Verwendung nach einem oder mehreren der Ansprüche 1 bis 3, **dadurch gekennzeichnet, dass** es sich um eine zweikomponentige phosphorhaltige Flammschutzmittefformulierung handelt, die aus 0,1 bis 99,9 Gew.-% einer Komponente C und 0,1 bis 99,9 Gew.-% einer Komponente D besteht, wobei die Komponente C aus 0,1 bis 99,9 Gew.-% Harz einer organischen Stickstoffverbindung und 0,1 bis 99,9 Gew.-% einer Aluminium- und/oder Titan- und/oder Zink- und/oder Zinn- und/oder Zirkonium-Verbindung besteht und die Komponente D ein nichtpartikuläres phosphorhaltiges Flammschutzmittel ist.

11. Verwendung nach Anspruch 10, **dadurch gekennzeichnet, dass** es sich um eine zweikomponentige phosphorhaltige Flammschutzmittelformulierung handelt, die aus 22,3 bis 86,8 Gew.-% einer Komponente C und 77,7 bis 13,2 Gew.-% einer Komponente D besteht, wobei die Komponente C aus 51,5 bis 67,5 Gew.-% Harz einer organischen Stickstoffverbindung und 48,5 bis 32,5 Gew.-% einer aluminium- und/oder Titan- und/oder Zink- und/oder Zinn- und/oder Zirkonium-Verbindung besteht und die Komponente D ein nichtpartikuläres phosphorhaltiges Flammschutzmittel ist.

12. Verwendung nach einem oder mehreren der Ansprüche 1 bis 3, **dadurch gekennzeichnet, dass** es sich um eine dreikomponentige phosphorhaltige Flammschutzmittelformulierung handelt, die aus 0,1 bis 99,9 Gew.-% einer Komponente E, einem Harz einer organischen Stickstoffverbindung, 0,1 bis 99,9 Gew.-% einer Komponente D, einem nichtpartikulären phosphorhaltigen Flammschutzmittel und 0,1 bis 99,9 Gew.-% einer Komponente B, einer Aluminium- und/oder Titan- und/oder Zink- und/oder Zinn- und/oder Zirkonium-Verbindung besteht.

## Claims

1. The use of a phosphorus-containing flame retardant formulation composed of
from 0.1 to 99.9% by weight of a resin of an organic nitrogen compound, which use involves urethanes, cyanamide, dicyandiamide, aniline, sulfonamide, biuret, allantoin, tolyltriazole, benzotriazole, 2-amino-4-methylpyrimidine, hydantoin, substituted hydantoin derivatives, malonamide amidine, ethylenebis-5-triazone, glycine anhydride, and any desired mixtures thereof, and
from 0.1 to 99.9% by weight of a phosphorus-containing flame retardant, wherein the phosphorus-containing flame retardant comprises a particulate or non-particulate phosphorus-containing flame retardant and the particulate phosphorus-containing flame retardant comprises a phosphinic salt of the formula (I) and/or a diphosphinic salt of the formula (II) and/or polymers of these 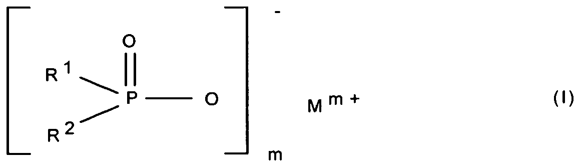 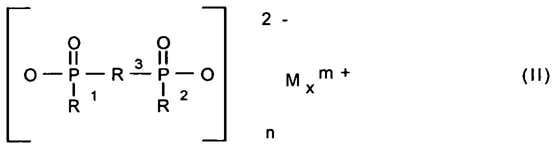 where
R¹ and R² are identical or different and are C₁-C₆-alkyl, linear or branched, and/or aryl; R³ is C₁-C₁₀-alkylene, linear or branched, C₆-C₁₀-arylene, -alkylarylene, or -arylalkylene; M is Mg, Ca, Al, Sb, Sn, Ge, Ti, Fe, Zr, Ce, Bi, Sr, Mn, Li and/or a protonated nitrogen base; m is from 1 to 4; n is from 1 to 4; x is from 1 to 4 and wherein the non-particulate phosphorus-containing flame retardant comprises a phosphinic acid and/or phosphinic salt of the formula (I) and/or a diphosphinic acid and/or diphosphinic salt of the formula (II) and/or polymers of these, where R¹, R², and R³ are as defined and M is Na, K, or H, and
m is 1;
n is 1;
x is 1, for providing flame retardancy to paper, cardboard, paperboard, textiles, wood, and other cellulose-containing materials, wherein the phosphorus-containing flame retardant formulation is added to the fiber suspension during engine sizing of paper, cardboard, or paperboard; for providing flame retardancy to textiles, the phosphorus-containing flame retardant formulation is applied in the form of an impregnating solution to the textiles; for providing flame retardancy to wood, the wood is introduced into an impregnating system and is exposed for at least 20 minutes to a pressure of 50 mbar, the wood being impregnated at a pressure of 16 bar for from 1 to 10 hours with an impregnating solution which comprises the phosphorus-containing flame retardant formulation of claims 1 to 12; or for providing flame retardancy to wood, the wood is coated via dipping processes, spraying processes, or spreading processes, where the coating component comprises the phosphorus-containing flame retardant formulation.

2. The use as claimed in claim 1, wherein R¹ and R² are identical or different and are methyl, ethyl, n-propyl, isopropyl, n-butyl, tert-butyl, n-pentyl, and/or phenyl.

3. The use as claimed in claim 1 or 2, wherein R³ is methylene, ethylene, n-propylene, isopropylene, n-butylene, tert-butylene, n-pentylene, n-octylene or n-dodecylene; phenylene or naphthylene; methylphenylene, ethylphenylene, tert-butylphenylene, methyl-naphthylene, ethylnaphthylene, or tert-butylnaphthylene; phenylmethylene, phenyl-ethylene, phenylpropylene, or phenylbutylene.

4. The use as claimed in one or more of claims 1 to 3, which involves a single-component flame retardant formulation which is composed of from 18.8 to 69.9% by weight of a resin of an organic nitrogen compound and from 81.2 to 30.1% by weight of particulate phosphorus-containing flame retardant.

5. The use as claimed in one or more of claims 1 to 4, wherein the median particle size d₅₀ of the particulate flame retardant is from 1 nm to 5 mm, preferably from 100 nm to 100 µm, and particularly preferably from 1 to 20 µm.

6. The use as claimed in one or more of claims 1 to 5, wherein the phosphorus-containing flame retardant formulation comprises an aluminum compound, titanium compound, zinc compound, tin compound, and/or zirconium compound.

7. The use as claimed in one or more of claims 1 to 6, which involves a single-component flame retardant formulation which is composed of from 18.8 to 69.9% by weight of a resin of an organic nitrogen compound and from 81.2 to 30.1 % by weight of non-particulate phosphorus-containing flame retardant.

8. The use as claimed in one or more of claims 1 to 3, which involves a two-component phosphorus-containing flame retardant formulation which is composed of from 0.1 to 99.9% by weight of a component A and from 0.1 to 99.9% by weight of a component B, where component A is composed of from 0.1 to 99.9% by weight of resin of an organic nitrogen compound and from 0.1 to 99.9% by weight of non-particulate phosphorus-containing flame retardant, and component B is an aluminum compound and/or titanium compound and/or zinc compound and/or tin compound and/or zirconium compound.

9. The use as claimed in claim 8, which involves a two-component phosphorus-containing flame retardant formulation which is composed of from 68.9 to 87.9% by weight of a component A and from 31.1 to 12.1 % by weight of a component B, where component A is composed of from 93.7 to 1.5% by weight of resin of an organic nitrogen compound and from 6.3 to 98.5% by weight of non-particulate phosphorus-containing flame retardant, and component B is an aluminum compound and/or titanium compound and/or zinc compound and/or tin compound and/or zirconium compound.

10. The use as claimed in one or more of claims 1 to 3, which involves a two-component phosphorus-containing flame retardant formulation which is composed of from 0.1 to 99.9% by weight of a component C and from 0.1 to 99.9% by weight of a component D, where component C is composed of from 0.1 to 99.9% by weight of resin of an organic nitrogen compound and from 0.1 to 99.9% by weight of an aluminum compound and/or titanium compound and/or zinc compound and/or tin compound and/or zirconium compound, and component D is a non-particulate phosphorus-containing flame retardant.

11. The use as claimed in claim 10, which involves a two-component phosphorus-containing flame retardant formulation which is composed of from 22.3 to 86.8% by weight of a component C and from 77.7 to 13.2% by weight of a component D, where component C is composed of from 51.5 to 67.5% by weight of resin of an organic nitrogen compound and from 48.5 to 32.5% by weight of an aluminum compound and/or titanium compound and/or zinc compound and/or tin compound and/or zirconium compound, and component D is a non-particulate phosphorus-containing flame retardant.

12. The use as claimed in one or more of claims 1 to 3, which involves a three-component phosphorus-containing flame retardant formulation which is composed of from 0.1 to 99.9% by weight of a component E, a resin of an organic nitrogen compound, from 0.1 to 99.9% by weight of a component D, a non-particulate phosphorus-containing flame retardant, and from 0.1 to 99.9% by weight of a component B, an aluminum compound and/or titanium compound and/or zinc compound and/or tin compound and/or zirconium compound.

## Revendications

1. Utilisation d'une formulation d'agent ignifuge contenant du phosphore, constituée par
0,1 à 99,9% en poids d'une résine d'un composé azoté organique, **caractérisée en ce qu'**il s'agit d'uréthane, de cyanamide, de dicyanodiamide, d'aniline, de sulfonamide, de biuret, d'allantoïne, de toluyltriazole, de benzotriazole, de 2-amino-4-méthylpyrimidine, d'hydantoïne, de dérivés substitués de l'hydantoïne, d'amidoamidine de l'acide malonique, d'éthylène-bis-5-triazone, d'anhydride de glycine et de leurs mélanges quelconques, et
0,1 à 99,9% en poids d'un agent ignifuge contenant du phosphore, **caractérisé en ce qu'**il s'agit, pour l'agent ignifuge contenant du phosphore, d'un agent ignifuge particulaire ou non particulaire contenant du phosphore et il s'agit, pour l'agent ignifuge particulaire contenant du phosphore, d'un sel d'acide phosphinique de formule (I) et/ou d'un sel d'acide diphosphinique de formule (II) et/ou de leurs polymères 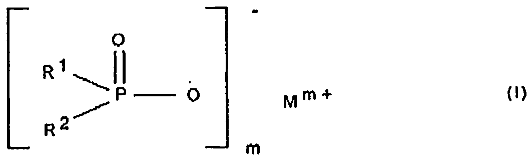 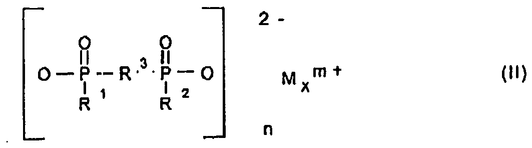 où
R¹, R² sont identiques ou différents et représentent C₁-C₆-alkyle linéaire ou ramifié et/ou aryle ;
R³ représente C₁-C₁₀-alkylène, linéaire ou ramifié, C₆-C₁₀-arylène, C₆-C₁₀-alkylarylène ou C₆-C₁₀-arylalkylène ; M représente Mg, Ca, Al, Sb, Sn, Ge, Ti, Fe, Zr, Ce, Bi, Sr, Mn, Li et/ou une base azotée protonée ; m vaut 1 à 4 ; n vaut 1 à 4 ; x vaut 1 à 4 et il s'agit, pour l'agent ignifuge non particulaire contenant du phosphore, d'un acide phosphinique et/ou d'un sel d'acide phosphinique de formule (I) et/ou d'un acide diphosphinique et/ou d'un sel d'acide diphosphinique de formule (II) et/ou de leurs polymères, R¹, R² et R³ présentant la signification mentionnée et M représentant Na, K ou H, et
m vaut 1 ;
n vaut 1 ;
x vaut 1,
pour l'apprêt ignifuge de papier, carton ondulé, carton, textiles, bois et autres matériaux contenant de la cellulose, **caractérisée en ce que** lors du collage dans la masse de papier, de carton ondulé ou de carton, la formulation d'agent ignifuge contenant du phosphore est ajoutée à la suspension de substances fibreuses ; pour l'apprêt ignifuge de textiles, la formulation d'agent ignifuge contenant du phosphore est appliquée sous forme d'une solution d'imprégnation sur les textiles ; pour l'apprêt ignifuge du bois, le bois est introduit dans une installation d'imprégnation et soumis pendant au moins 20 minutes à une pression de 50 mbars, le bois étant imprégné, à une pression de 16 bars, pendant 1 à 10 heures avec une solution d'imprégnation, qui contient la formulation d'agent ignifuge contenant du phosphore selon les revendications 1 à 12 ; ou pour l'apprêt ignifuge de bois, le bois est revêtu par des procédés d'immersion, de pulvérisation ou d'enduction, le composant de recouvrement contenant la formulation d'agent ignifuge contenant du phosphore.

2. Utilisation selon la revendication 1, **caractérisée en ce que** R¹, R² sont identiques ou différents et signifient méthyle, éthyle, n-propyle, isopropyle, n-butyle, tert-butyle, n-pentyle et/ou phényle.

3. Utilisation selon la revendication 1 ou 2, **caractérisée en ce que** R³ signifie méthylène, éthylène, n-propylène, isopropylène, n-butylène, tert-butylène, n-pentylène, n-octylène ou n-dodécylène ; phénylène ou naphtylène ; méthylphénylène, éthylphénylène, tert-butylphénylène, méthylnaphtylène, éthylnaphtylène ou tert-butylnaphtylène ; phénylméthylène, phényléthylène, phénylpropylène ou phénylbutylène.

4. Utilisation selon l'une ou plusieurs des revendications 1 à 3, **caractérisée en ce qu'**il s'agit d'une formulation d'agent ignifuge à un composant qui est constituée par 18,8 à 69,9% en poids d'une résine d'un composé azoté organique et par 81,2 à 30,1% en poids d'agent ignifuge particulaire contenant du phosphore.

5. Utilisation selon l'une ou plusieurs des revendications 1 à 4, **caractérisée en ce que** la grosseur moyenne des particules d₅₀ de l'agent ignifuge particulaire est de 1 nm à 5 mm, de préférence de 100 nm à 100 µm et de manière particulièrement préférée de 1 à 20 µm.

6. Utilisation selon l'une ou plusieurs des revendications 1 à 5, **caractérisée en ce que** la formulation d'agent ignifuge contenant du phosphore contient un composé de l'aluminium, du titane, du zinc, de l'étain et/ou du zirconium.

7. Utilisation selon l'une ou plusieurs des revendications 1 à 6, **caractérisée en ce qu'**il s'agit d'une formulation d'agent ignifuge à un composant qui est constituée par 18,8 à 69,9% en poids d'une résine d'un composé azoté organique et par 81,2 à 30,1% en poids d'agent ignifuge non particulaire contenant du phosphore.

8. Utilisation selon l'une ou plusieurs des revendications 1 à 3, **caractérisée en ce qu'**il s'agit d'une formulation d'agent ignifuge contenant du phosphore à deux composants, qui est constituée par 0,1 à 99,9% en poids d'un composant A et par 0,1 à 99,9% en poids d'un composant B, le composant A étant constitué par 0,1 à 99,9% en poids de résine d'un composé azoté organique et par 0,1 à 99,9% en poids d'agent ignifuge non particulaire contenant du phosphore et le composant B étant un composé de l'aluminium et/ou du titane et/ou du zinc et/ou de l'étain et/ou du zirconium.

9. Utilisation selon la revendication 8, **caractérisée en ce qu'**il s'agit d'une formulation d'agent ignifuge contenant du phosphore à deux composants, qui est constituée par 68,9 à 87,9% en poids d'un composant A et par 31,1 à 12,1% en poids d'un composant B, le composant A étant constitué par 93,7 à 1,5% en poids de résine d'un composé azoté organique et par 6,3 à 98,5% en poids d'agent ignifuge non particulaire contenant du phosphore et le composant B étant un composé de l'aluminium et/ou du titane et/ou du zinc et/ou de l'étain et/ou du zirconium.

10. Utilisation selon l'une ou plusieurs des revendications 1 à 3, **caractérisée en ce qu'**il s'agit d'une formulation d'agent ignifuge contenant du phosphore à deux composants, qui est constituée par 0,1 à 99,9% en poids d'un composant C et par 0,1 à 99,9% en poids d'un composant D, le composant C étant constitué par 0,1 à 99,9% en poids de résine d'un composé azoté organique et par 0,1 à 99,9% en poids un composé de l'aluminium et/ou du titane et/ou du zinc et/ou de l'étain et/ou du zirconium et le composant D étant un agent ignifuge non particulaire contenant du phosphore.

11. Utilisation selon la revendication 10, **caractérisée en ce qu'**il s'agit d'une formulation d'agent ignifuge contenant du phosphore à deux composants, qui est constituée par 22,3 à 86,8% en poids d'un composant C et par 77,7 à 13,2% en poids d'un composant D, le composant C étant constitué par 51,5 à 67,5% en poids de résine d'un composé azoté organique et par 48,5 à 32,5% en poids un composé de l'aluminium et/ou du titane et/ou du zinc et/ou de l'étain et/ou du zirconium et le composant D étant un agent ignifuge non particulaire contenant du phosphore.

12. Utilisation selon l'une ou plusieurs des revendications 1 à 3, **caractérisée en ce qu'**il s'agit d'une formulation d'agent ignifuge contenant du phosphore à trois composants, qui est constituée par 0,1 à 99,9% en poids d'un composant E, une résine d'un composé azoté organique, par 0,1 à 99,9% en poids d'un composant D, un agent ignifuge non particulaire contenant du phosphore, et par 0,1 à 99,9% en poids d'un composant B, un composé de l'aluminium et/ou du titane et/ou du zinc et/ou de l'étain et/ou du zirconium.
